# EUROPEAN PATENT APPLICATION

(11) **EP 4 648 486 A2**
(43) Date of publication of application: **12.11.2025**
(21) Application number: 24797285.4
(22) Date of filing: 25.03.2024
(51) Int. Cl.: H04W 48/18, H04L 41/044, H04L 41/0803, H04W 88/14, H04W 92/24, H04L 41/04, H04W 92/14

(54) **MANAGEMENT NODE IN WIRELESS COMMUNICATION SYSTEM HAVING NETWORK SLICING ENVIRONMENT, AND OPERATING METHOD THEREFOR**

(30) Priority: 24.04.2023 KR 20230053647; 08.05.2023 KR 20230059371
(71) Applicant: Samsung Electronics Co., Ltd., Suwon-si, Gyeonggi-do 16677 (KR)
(72) Inventor: KIENIG, Jan, 00-844 Warszawa (PL); WYSZKOWSKI, Przemyslaw, 00-844 Warszawa (PL); ZAWADZKI, Mateusz, 00-844 Warszawa (PL)
(74) Representative: Nederlandsch Octrooibureau
(86) International application number: PCT/KR2024/003670
(87) International publication number: WO 2024/225623

(57) **Abstract**

A management node and its operating method in a wireless communication system with a network slicing environment are disclosed. The management node may, as one or more of multiple higher-level entities sharing a lower-level entity managed by the management node are activated, receive an activation request of the shared lower-level entity, and activate the shared lower-level entity for the one or more activated higher-level entities, in response to the activation request. Besides, various other embodiments are possible.

## Description

### [Technical Field]

The present disclosure relates to a management node and its operating method in a wireless communication system, and for example, to the management node for managing a network entity and its operating method in the wireless communication system with a network slicing environment.

### [Background Art]

A fifth generation (5G) mobile communication technology defines a broad frequency band to allow a high transmission rate and a new service, and may be implemented not only in a frequency ('Sub 6 gigahertz (GHz)') band below 6 GHz such as 3.5 GHz but also in an extremely high frequency band ('Above 6 GHz') referred to as a millimeter wave (mmWave) such as 28 GHz and 39 GHz. In addition, a sixth generation (6G) mobile communication technology referred to as a beyond 5G system is considering its implementation in a terahertz (THz) band (e.g., in a band from 95 GHz to 3 THz) to achieve the transmission rate fifty times faster than the 5G mobile communication technology and ultra low latency reduced to one-tenth.

At the initial stage of the 5G mobile communication technology, to support services and to satisfy performance requirements for enhanced mobile broadband, (eMBB), ultra-reliable low-latency communications (URLLC), and massive machine-type communications (mMTC), standardization has been conducted on beamforming and massive multiple input multiple output (MIMO) for alleviating a radio wave path loss and increasing a radio wave transmission distance in the extremely high frequency band, support of various numerologies (operating multiple subcarrier spacings and so on) for efficiently utilizing extremely high frequency resources and slot format dynamic operation, an initial access technology for supporting multi-beam transmission and the broadband, definition and operation of a bandwidth part (BWP), a new channel coding method such as a low density parity check (LDPC) code for large-capacity data transmission and a polar code for higher-reliability transmission of control information, L2 pre-processing, and network slicing for providing a dedicated network customized to a specific service.

Currently, there is ongoing discussion regarding improvement and performance enhancement of the initial 5G mobile communication technology by considering the services to be supported by the 5G mobile communication technology, and physical layer standardization is conducted on technologies such as vehicle-to-everything (V2X) for aiding driving determination of an autonomous vehicle based on location and state information transmitted by the vehicle and enhancing user convenience, new radio unlicensed (NR-U) aimed at system operations conforming to various regulation-related requirements in an unlicensed band, NR user equipment (UE) power saving, a non-terrestrial network (NTN) which is UE-satellite direct communication for securing coverage in an area where communication with a terrestrial network is impossible, and positioning.

There has also been ongoing standardization in wireless interface architecture/protocol fields for technologies such as industrial internet of things (IoT) for supporting a new service through interworking and converging with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying a random access procedure (2-step RACH for NR), and standardization is also conducted in system architecture/service fields for a 5G baseline architecture (e.g., service based architecture, service based interface) for combining network functions virtualization (NFV) and software-defined networking (SDN) technologies, and mobile edge computing (MEC) for receiving a service based on a UE location.

If such a 5G mobile communication system is commercialized, connected devices which are exponentially increasing will be connected to the communication network, and accordingly it is expected that function and performance enhancement of the 5G mobile communication system and integrated operation of the connected devices are needed. To this end, new research is scheduled on extended reality (XR) for efficiently supporting augmented reality (AR), virtual reality (VR), and mixed reality (MR), 5G performance improvement and complexity reduction by utilizing artificial intelligence (AI) and machine learning (ML), AI service support, metaverse service support, and drone communication.

In addition, such development of the 5G mobile communication system will serve as a basis for developing not only new waveform for securing coverage in the terahertz band of the 6G mobile communication technology, full dimensional MIMO (FD-MIMO), multi-antenna transmission technology such as an array antenna and a large scale antenna, metamaterial-based lens and antenna for improving terahertz band signal coverage, higher-dimensional space multiplexing technology using orbital angular momentum (OAM), and reconfigurable intelligent surface (RIS), but also full duplex technology for increasing frequency efficiency and improving a system network of the 6G mobile communication technology, AI based communication technology for implementing system optimization by utilizing a satellite and an AI from the design stage and embedding an end-to-end AI support function, and next-generation distributed computing technology for implementing services of complexity exceeding UE processing capability limits by utilizing ultra high performance communication and computing resources.

Network slicing may be a network architecture which enables multiplexing of virtualized and independent logical networks on the same physical network infrastructure in the wireless communication system such as the 5G mobile communication system. Each network slice (or subnet) may represent an isolated end-to-end network, tailored to fulfill various requirements requested by a particular application. Through the network slicing technique, multiple virtualized logical networks may exist on one physical network.

### [Disclosure of Invention]

### [Solution to Problem]

Embodiments of the disclosure may provide an operating method of a management node. The method of operating a management node according to an embodiment may be in a wireless communication system with a network slicing environment. The method may include, as one or more of multiple higher-level entities sharing a lower-level entity managed by the management node are activated, receiving an activation request of the shared lower-level entity, and activating the shared lower-level entity for the one or more activated higher-level entities, in response to the activation request.

Embodiments of the disclosure may provide a management node. The management node according to an embodiment may be in a wireless communication system with a network slicing environment. The management node may include a transceiver and at least one processor connected to the transceiver. The at least one processor may be configured to, as one or more of multiple higher-level entities sharing a lower-level entity managed by the management node are activated, receive an activation request of the shared lower-level entity, and activate the shared lower-level entity for the one or more activated higher-level entities, in response to the activation request.

### [Brief Description of Drawings]

The above and other aspects, features and advantages of certain embodiments of the present disclosure will be more apparent from the following detailed description, taken in conjunction with the accompanying drawings, in which:
FIG. 1 illustrates a communication network including network entities in a wireless communication system according to various embodiments.
FIG. 2A is a diagram illustrating sharability of network slice instances (NSIs) and network slice subnet instances (NSSIs) in a wireless communication system according to an embodiment.
FIG. 2B illustrates a configuration of a management node in a wireless communication system according to an embodiment.
FIG. 3 is a flowchart illustrating an operating method of a management node in a wireless communication system according to an embodiment.
FIG. 4A and FIG. 4B are diagrams for illustrating a selective activation operation of a shared entity in a wireless communication system according to an embodiment.
FIG. 5A and FIG. 5B are diagrams for illustrating a selective deactivation operation of a shared entity in a wireless communication system according to an embodiment.
FIG. 6A and FIG. 6B are flowcharts illustrating a selective activation operation of one NSSI shared by multiple NSIs in a wireless communication system according to an embodiment.
FIG. 7A is a flowchart illustrating a selective activation operation of a shared entity if higher-level entities are managed by different management systems in a wireless communication system according to an embodiment.
FIG. 7B is a flowchart illustrating a selective activation operation of a shared entity if multi-level entities are managed by a single management system in a wireless communication system according to an embodiment.
FIG. 8A is a flowchart illustrating a selective activation operation of managed functions (MFs) by a switching scheme supported by an element management system (EMS) in a wireless communication system according to an embodiment.
FIG. 8B is a flowchart illustrating a selective deactivation operation of MFs by a switching scheme supported by an EMS in a wireless communication system according to an embodiment.
FIG. 9A is a flowchart illustrating a selective activation operation of MFs by a completing configuration scheme in a wireless communication system according to an embodiment.
FIG. 9B is a flowchart illustrating a selective deactivation operation of MFs by a completing configuration scheme in a wireless communication system according to an embodiment.
FIG. 10A is a flowchart illustrating a selective activation operation of an NSSI or MFs by a network communication blocking or unblocking scheme in a wireless communication system according to an embodiment.
FIG. 10B is a flowchart illustrating a selective deactivation operation of an NSSI or MFs by a network communication blocking or unblocking scheme in a wireless communication system according to an embodiment.
FIG. 11A and FIG. 11B are diagrams for illustrating a selective deactivation operation of an NSSI by a consensus scheme of a network slice management function (NSMF) in a wireless communication system according to an embodiment.

### [Mode for the Invention]

It should be understood that various embodiments of the present disclosure and terms used herein do not intend to limit technical features disclosed in the present disclosure to specific embodiments, but embrace various modifications, equivalents, or alternatives of corresponding embodiments.

Methods according to various embodiments of the present disclosure may be implemented in software, hardware, or a combination of hardware and software. In the software implementation, a computer-readable storage medium storing one or more programs (software modules) may be provided. One or more programs stored in the computer-readable storage medium is configured for execution by one or more processors of an electronic device. One or more programs include instructions for controlling the electronic device to execute the methods according to the embodiments described in the claims or the specification of the present disclosure.

Such a program (software module, software) may be stored to a random access memory, a non-volatile memory including a flash memory, a read only memory (ROM), an electrically erasable programmable ROM (EEPROM), a magnetic disc storage device, a compact disc (CD)-ROM, digital versatile discs (DVDs) or other optical storage devices, and a magnetic cassette. Alternatively, it may be stored to a memory combining part or all of them. In addition, a plurality of memories may be included.

Also, the program may be stored in an attachable storage device accessible via a communication network such as internet, intranet, local area network (LAN), wide LAN (WLAN), or storage area network (SAN), or a communication network by combining them. Such a storage device may access a device which executes an embodiment of the present disclosure through an external port. In addition, a separate storage device on the communication network may access a device which executes an embodiment of the present disclosure.

In the various embodiments of the present disclosure, components are expressed in a singular or plural form. However, the singular or plural expression is appropriately selected according to a proposed situation for the convenience of explanation, the present disclosure is not limited to a single component or a plurality of components, the components expressed in the plural form may be configured as a single component, and the components expressed in the singular form may be configured as a plurality of components.

Terms indicating signals, terms indicating channels, terms indicating control information, terms indicating network entities, terms indicating components of a device, which are used in the following descriptions, are for the sake of explanations. Accordingly, the present disclosure is not limited to the terms to be described, and other terms having technically identical or similar meaning may be used.

In addition, the present disclosure describes various embodiments by using terms used in some communication standards (e.g., 3rd generation partnership project (3GPP)), which are merely examples for the explanation. Various embodiments of the present disclosure may be easily modified and applied to other communication systems.

Hereafter, embodiments of the present disclosure will be described in detail to enable those skilled in the art to easily practice them in the technical field of the present disclosure with reference to the drawings. However, the present disclosure may be implemented in many different forms and is not limited to the embodiments described herein. In relation to the description of the drawings, identical or similar reference numerals may be used for identical or similar components. Additionally, in the drawings and related descriptions, descriptions on well-known functions and configurations may be omitted for clarity and brevity.

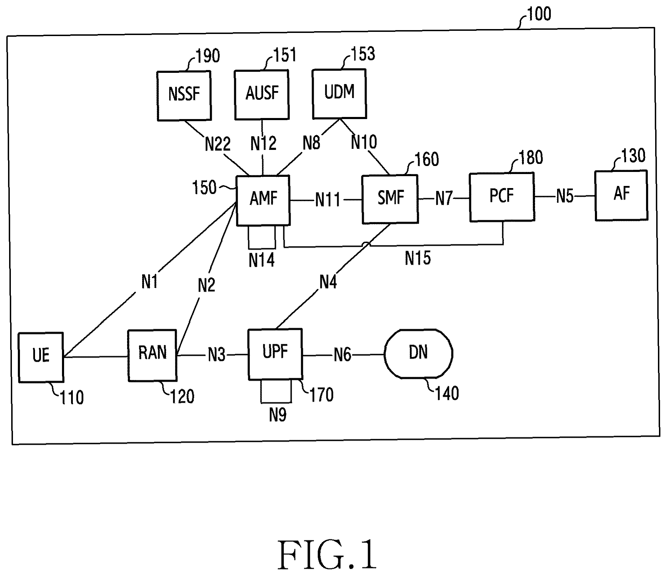

FIG. 1 illustrates a communication network including network entities in a wireless communication system according to various embodiments.

Referring to FIG. 1, a 5G mobile communication network of a wireless communication system 100 may include a user equipment (UE) 110, a radio access network (RAN) 120, and a core network (CN).

The CN is a network which manages the entire system, and may control the RAN 120, and process data and control signals of the UE 110 transmitted and received over the RAN 120. The CN may perform various functions such as user plane and control plane controlling, mobility processing, subscriber information management, charging, and interworking with other system (e.g., a long term evolution (LTE) system). To perform the various functions described above, the CN may include a plurality of functionally separated entities with different network functions (NFs).

The CN may include network functions such as an access and mobility management function (AMF) 150 which provides a mobility management function of the UE, a session management function (SMF) 160 which provides a session management function, a user plane function (UPF) 170 which delivers data, a policy control function (PCF) 180 which provides a policy and charging function, a unified data management (UDM) 153 which provides a data management function such as subscriber data or policy control data, a network slice selection function (NSSF) 190 which operates and/or manages network slices, or a unified data repository (UDR) which stores data of various network functions. Although not depicted in FIG. 1, the CN may further include a communication service management function (CSMF) for creating a network slice and identifying a user service, a network slice management function (NSMF) and a network slice subnet management function (NSSMF).

Referring to FIG. 1, the UE 110 may perform communication over a radio channel built with a base station (e.g., an evolved Node B (eNB), a next generation nodeB (gNB)), that is, over an access network. In some embodiments, the UE 110 is a device used by a user, and may be configured to provide a user interface (UI). For example, the UE 110 may be a terminal equipped in a vehicle for driving. In some other embodiments, the UE 110 may be a device performing machine type communication (MTC) operated without user's involvement, or an autonomous vehicle. Besides an electronic device, the UE may be referred to as a 'terminal', a 'vehicle terminal', a 'UE', a 'mobile station', a 'subscriber station', a 'remote terminal', a 'wireless terminal', a 'user device' or other term having the equivalent technical meaning. As the terminal, a customer-premises equipment (CPE) or a dongle type terminal may be used besides the UE. The CPE is connected to an NG-RAN node like the UE, and may provide the network to other communication equipment (e.g., a laptop).

Referring to FIG. 1, the AMF 150 provides the function for the access and mobility management based on the UE 110, and one UE 110 may be basically connected to one AMF 150. Specifically, the AMF 150 may perform at least one function of signaling between core network nodes for mobility of 3GPP access networks, interface (N2 interface) between radio access networks (e.g., the RAN 120), non-access stratum (NAS) signaling with the UE 110, identifying the SMF 160, and delivering a session management (SM) message between the UE 110 and the SMF 160. Some or all of the functions of the AMF 150 may be supported within a single instance of one AMF 150.

Referring to FIG. 1, the SMF 160 provides the session management function, and if the UE 110 has a plurality of sessions, the sessions may be managed by different SMFs 160 respectively. Specifically, the SMF 160 may perform at least one function of session management (e.g., session establishment, modification and release including tunnel maintenance between the UPF 170 and an access network node), user plane (UP) function selection and control, traffic steering configuration for routing traffic from the UPF 170 to a proper destination, termination of the SM part of the NAS message, downlink data notification (DDN), and an initiator of AN specific SM information (e.g., deliver to the access network through the N2 interface via the AMF 150). Some or all functions of the SMF 160 may be supported within a single instance of one SMF 160.

In the 3GPP system, conceptual links interconnecting network functions (NFs) within the 5G system may be referred to as reference points. The reference point may be referred to as an interface. The following illustrates reference points included in the 5G system architecture represented in FIG. 1 through FIG. 11B.
- N1: a reference point between the UE 110 and the AMF 150
- N2: a reference point between the (R)AN 120 and the AMF 150
- N3: a reference point between the (R)AN 120 and the UPF 170
- N4: a reference point between the SMF 160 and the UPF 170
- N5: a reference point between the PCF 180 and the AF 130
- N6: a reference point between the UPF 170 and the DN 140
- N7: a reference point between the SMF 160 and the PCF 180
- N8: a reference point between the UDM 153 and the AMF 150
- N9: a reference point between two core UPFs 170
- N10: a reference point between the UDM 153 and the SMF 160
- N11: a reference point between the AMF 150 and the SMF 160
- N12: a reference point between the AMF 150 and an authentication server function (AUSF) 151
- N13: a reference point between the UDM 153 and the AUSF 151
- N14: a reference point between two AMFs 150
- N15: a reference point between the PCF 180 and the AMF 150 in a non-roaming scenario, a reference point between the PCF 180 and the AMF 150 within a visited network in a roaming scenario
- N22: a reference point between the NSSF 190 and the AMF 150

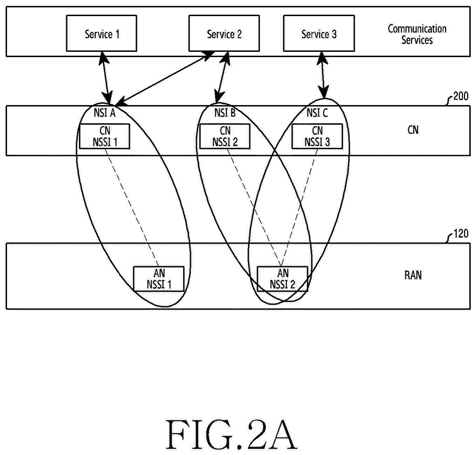

FIG. 2A is a diagram illustrating sharability of network slice instances (NSIs) and network slice subnet instances (NSSIs) in a wireless communication system according to an embodiment.

According to various embodiments, by applying the network slicing technique to the wireless communication system (e.g., the 5G mobile communication network of FIG. 1) including a RAN 120 and a CN 200, multiple logical networks may be spawned on one shared infrastructure, and unique characteristics for specific service requirements may be given to each logical network. In the network slicing environment, slicing entities which are network slice constituents may be shard. Instead of distributing dedicated managed entities to each new network, a single instance of the managed entity may be simultaneously used by multiple logical networks which are network slices.

According to various embodiments, in the wireless communication system with the network slicing environment, a slicing entity or a managed entity (e.g., an NSSI, an NSI, or a managed function (MF)) may have sharability. For example, one NSSI (e.g., any one of an NSSI 1, an NSSI 2, and an NSSI 3 of FIG. 2A) may be shared between multiple NSIs (e.g., at least a part of an NSI A, an NSI B, and an NSI C of FIG. 2A) or other nested NSSIs. One NSI may be shared between multiple communication service instances (CSIs). One MF may be shared between multiple NSSIs.

According to an embodiment, MFs may represent logical applications executed inside virtual network functions (VNFs)/physical network functions (PNFs)/container network functions (CNFs). The MFs may execute a predefined function set, and communicate with each other through standard interfaces called reference points. Creating a network slice may indicate spawning new instances of slice-dedicated MFs, and reusing MFs which may be shared among multiple slices. For example, the dedicated MFs may correspond to the SMF 160 or the UPF 170 shown in FIG. 1. For example, the shared MFs may correspond to any one of the UDM 153, the AMF 150, the NSSF 190, or a network repository function (NRF) (not depicted) shown in FIG. 1.

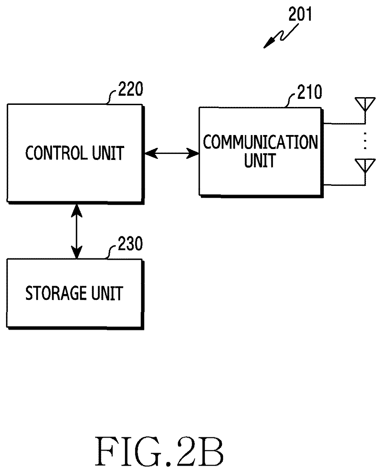

FIG. 2B illustrates a configuration of a management node in the wireless communication system according to an embodiment.

According to an embodiment, a management node 201 may be a device or a function for managing one or more slice entities. The management node 201 may be referred to as a management entity, a management system, or a management function. In an embodiment, the management node 201 may include a device or a function for managing a lower-level entity among multi-level entities (a higher-level entity and a lower-level entity) included in the wireless communication system. For example, the management node 201 may include a function or a device corresponding to at least one of the CSMF, the NSMF and the NSSMF. A term such as '...unit' or '...er' used hereafter indicates a unit for processing at least one function or operation, and may be implemented using hardware, software, or a combination of hardware and software.

Referring to FIG. 2B, the management node 201 according to an embodiment may include a communication unit (e.g., including communication circuitry) 210 and a control unit (e.g., including processing/control circuitry) 220. In an embodiment, the management node 201 may further include a storage unit 230.

In an embodiment, the communication unit 210 may provide an interface for communicating with other devices in the network. That is, the communication unit 210 may convert a bit string transmitted from the management node 210 to other device (or an external electronic device) into a physical signal, and convert a physical signal received from other device into a bit string. In an embodiment, the communication unit 210 may transmit and receive signals. Accordingly, the communication unit 210 may be referred to as a modem, a transmitter, a receiver or a transceiver. The communication unit 210 may support the management node 210 to communicate with other devices or systems via a backhaul connection (e.g., wired backhaul or wireless backhaul) or over the network.

In an embodiment, the storage unit 230 may store data such as a basic program, an application program, and setting information for the operations of the management node 201. The storage unit 230 may include a volatile memory, a nonvolatile memory or a combination of a volatile memory and a nonvolatile memory. The storage unit 230 may provide the stored data according to a request of the control unit 220.

In an embodiment, the control unit 220 may include at least one processor electrically and/or operatively coupled with the communication unit 210. The processor according to an embodiment of the disclosure may include various processing circuitry. For example, as used herein, including the claims, the term "processor", "control unit", etc., may include various processing circuitry, including at least one processor, wherein one or more of at least one processor may be configured to perform various functions described herein. Additionally, the at least one processor may include a combination of processors performing various of the recited /disclosed functions. At least one processor may execute program instructions to achieve or perform various functions. The control unit 220 may control general operations of the management node 201. For example, the control unit 220 may transmit and receive signals through the communication unit 210. In addition, the control unit 220 may record and read data in and from the storage unit 230. The control unit 220 may perform a designated function by executing instructions (or programs) stored in the storage unit 203.

According to an embodiment, as one or more (e.g., a first entity among the first entity and a second entity) of multiple higher-level entities sharing a lower-level entity (e.g., a third entity) managed by the management node 201 is activated, the control unit 220 may be configured to receive an activation request of the shared lower-level entity (e.g., the third entity), through the communication unit 210 (e.g., a transceiver).

In an embodiment, if the higher-level entities (e.g., the first entity and the second entity) are managed by different second management nodes, the control unit 220 may receive an activation request from a management node which manages one or more activated higher-level entities (e.g., the first entity) among the second management nodes.

In an embodiment, if multi-level entities including the higher-level entities (e.g., the first entity and the second entity) and the lower-level entity (e.g., the third entity) are managed by the management node 201 alone, the control unit 220 may internally detect activation request occurrence.

According to an embodiment, the control unit 220 of the management node 201 may be configured to activate the shared lower-level entity (e.g., the third entity) with respect to one or more activated higher-level entities (e.g., the first entity), in response to the activation request.

According to an embodiment, the management node 201 may include the NSSMF for managing the NSSI which is the lower-level entity. The NSSMF may receive an activation request of the NSSI for a specific NSI of the NSIs from the NSMF which manages NSIs which are higher-level entities. The NSSMF may partially activate the shared NSSI only for the specific NSI by the NSIs.

In an embodiment, the NSSMF may transmit an MF activation request of the specific NSF to an element management system (EMS) which manages the MFs, to thus enable the EMS to configure some of the MFs as the MF to be activated for the specific NSI in response to the MF activation request.

In an embodiment, the NSSMF may transmit an MF configuration request for the specific NSF to the EMS which manages the MFs, to thus enable the EMS to configure the MF for the specific NSI by leaving some of the MFs in response to the MF configuration request.

In an embodiment, the NSSMF may transmit a network reconfiguration request for enabling network communication related to the specific NSF to a network controller, to thus enable the network controller to reconfigure the network in response to the network reconfiguration request.

In an embodiment, the NSSMF may activate a lower-level entity (e.g., the NSSI) shared by the higher-level entities only for an activated entity set (e.g., the NSI 1) of the higher-level entities (e.g., the NSI 1, the NSI2). The NSSMF may deactivate a lower-level entity (e.g., the NSSI) shared by the higher-level entities with respect to the other deactivated entity set (e.g., the NSI 2) of the higher-level entities (e.g., the NSI 1, the NSI2).

According to an embodiment, the control unit 220 of the management node 201 may be configured to receive a deactivation request of the shared lower-level entity (e.g., a third entity), as one or more of higher-level entities (e.g., a first entity and a second entity) are deactivated (e.g., the first entity). The control unit 220 may be configured to deactivate the shared lower-level entity (e.g., a third entity) for one or more deactivated higher-level entities (e.g., the first entity), in response to the deactivation request.

In an embodiment, the management node 201 may include the NSSMF for managing the NSSI which is the shared lower-level entity. In an embodiment, the NSSMF may identify whether the NSIs which are the higher-level entities sharing one NSSI are all deactivated. The NSSMF may deactivate the NSSI if the NSIs which are the higher-level entities sharing one NSSI being the shared lower-level entity are all deactivated, and may maintain the NSSI in the active state if all of the NSIs which share the NSSI are not deactivated.

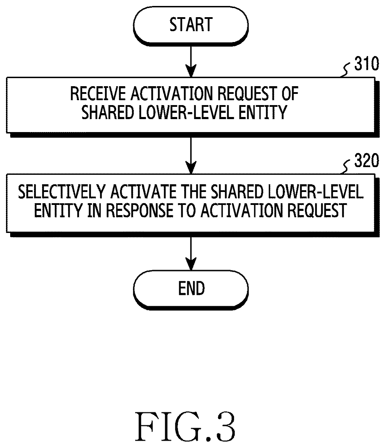

FIG. 3 is a flowchart illustrating an operating method of a management node in a wireless communication system according to an embodiment.

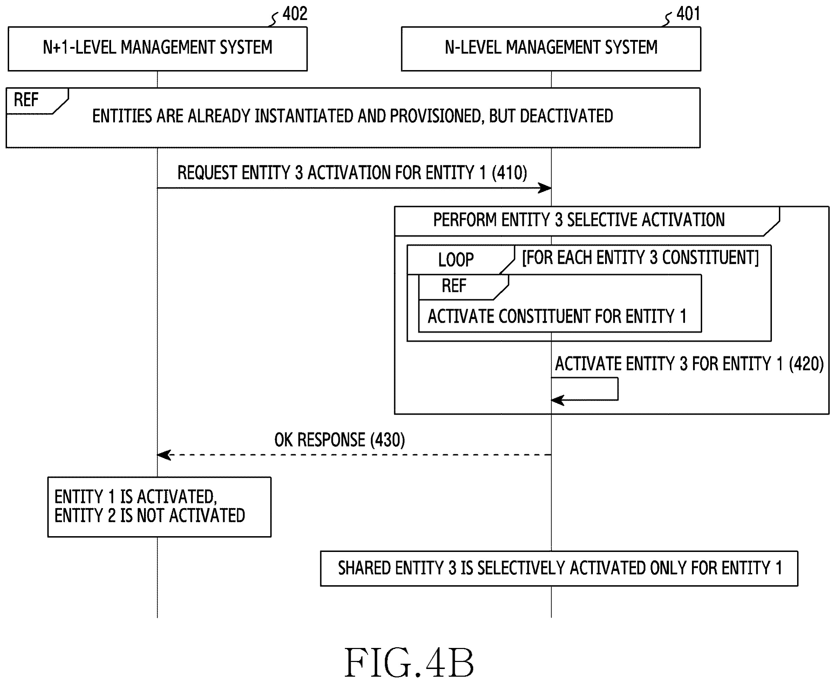

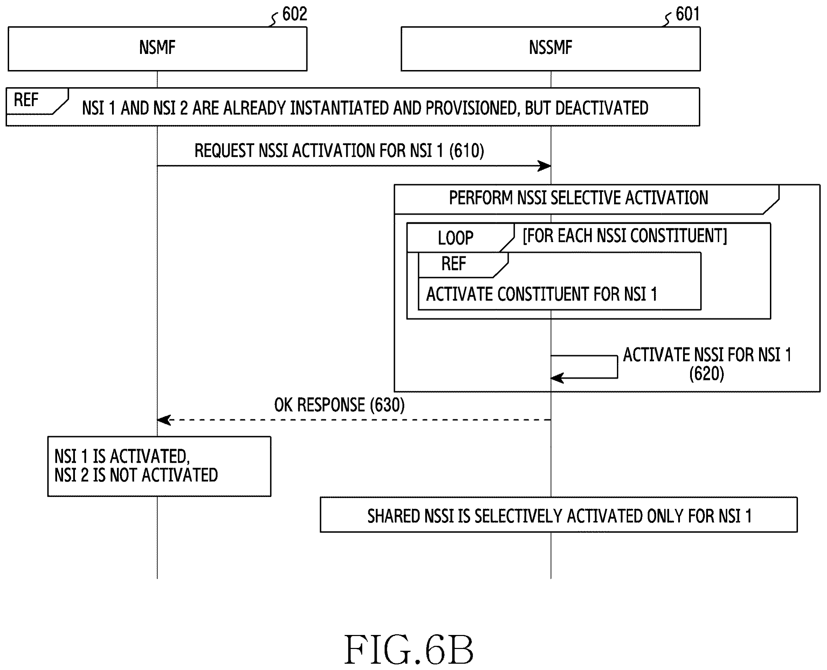

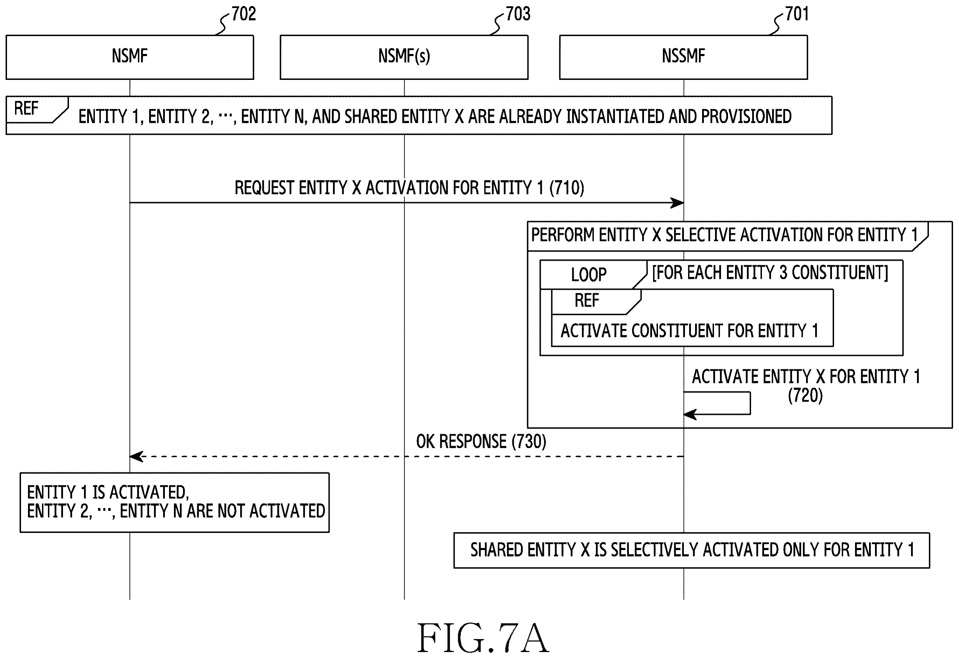

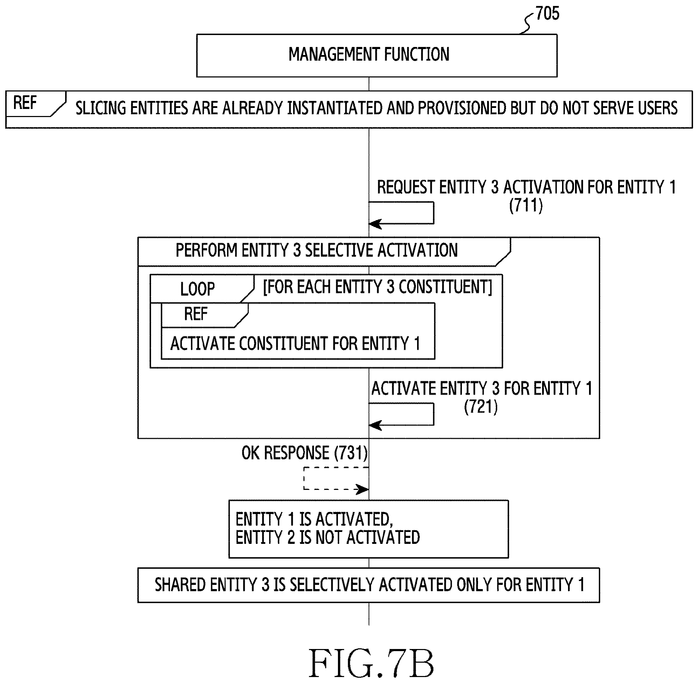

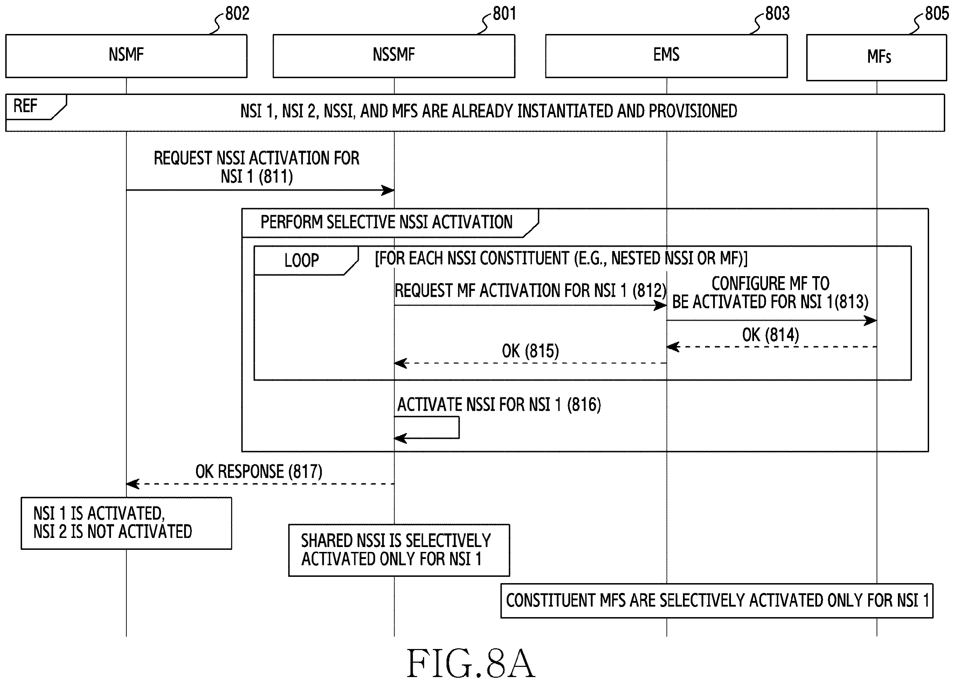

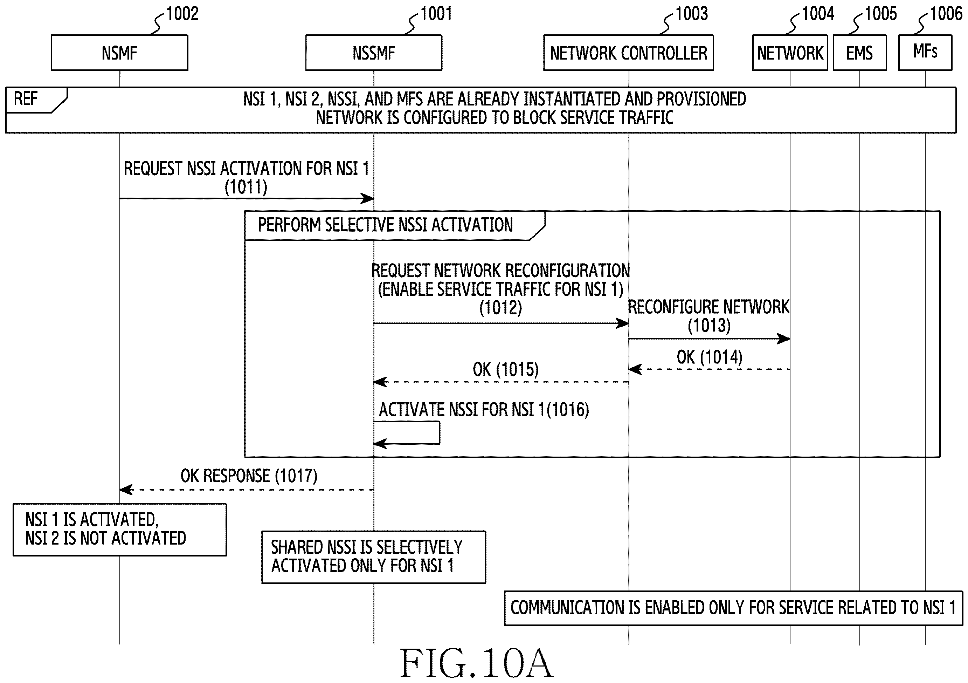

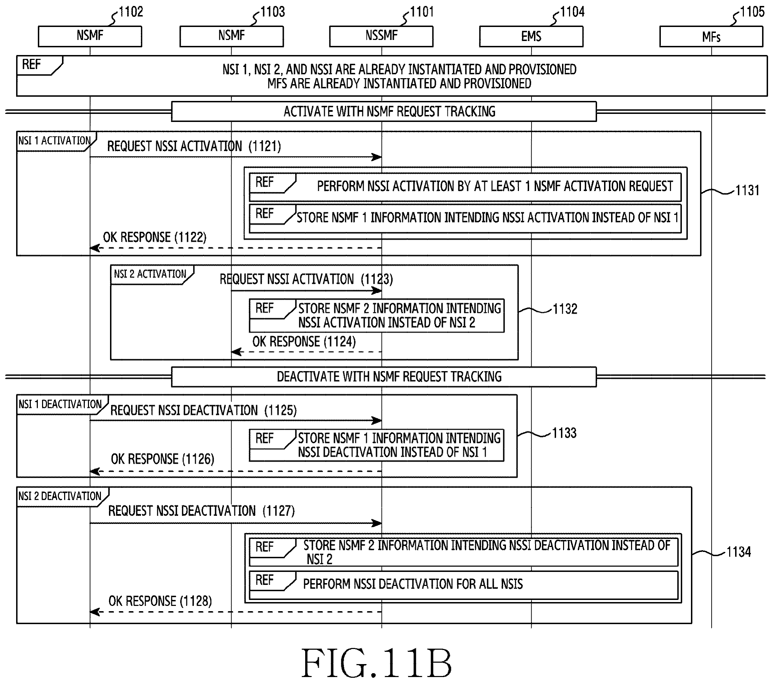

Operations of the method shown in FIG. 3 may be performed by the management node 201 of FIG. 2B, for example, any one of an N-level management system 401 of FIG. 4B, an NSSMF 601 of FIG. 6B, an NSSMF 701 of FIG. 7A, an MF 705 of FIG. 7B, an NSSMF 801 of FIG. 8A, an NSSMF 1001 of FIG. 10A, and an NSSMF 1101 of FIG. 11B to be described. However, it is not limited thereto. For example, the operations of the method shown in FIG. 3 may be performed by a combination of one or more devices or functions. The entity which fulfills the method shown in FIG. 3 is not limited to a hardware component. This may be implemented by hardware or software, or a combination of hardware and software. For example, in some embodiment, the method may be fulfilled by an application installed in the management node 201.

Referring to FIG. 3, the operating method of the management node in the wireless communication system may include operation 310 and operation 320.

According to an embodiment, a CN of the wireless communication system may include various multi-level entities, for example, an entity_1, an entity_2 and an entity_3. The entity_1, the entity_2 or the entity_3 may correspond to slicing entities operating in the network slicing environment. At least a part of the entity_1, the entity_2 and the entity_3 may be entities of different levels. For example, the entity _1 and the entity_2 may be entities of a higher level or a higher layer (e.g., an N+1 level) than the entity_3. The entity_3 may be an entity of a lower level or a lower layer (e.g., an N level) than the entity_1.

According to an embodiment, the CN of the wireless communication system may include the management node 201. In an embodiment, the management node 201 may be a first management node for managing the entity_3 which is the lower-level entity. For example, the first management node may include at least one of the N-level management system 401 of FIG. 4B or the NSSMF 601 of FIG. 6B.

Operation 310 may include receiving an activation request of a shared lower-level entity (e.g., the entity_3). In operation 310, the management node (e.g., the control unit 220 of FIG. 2B) may receive the activation request of the shared lower-level entity (e.g., the entity_3), as one or more (e.g., the entity_1) of the multiple higher-level entities (e.g., the entity_1, the entity_2) sharing the lower-level entity (e.g., the entity_3) managed by the management node 201 are activated.

According to an embodiment, if higher-level entities (e.g., the entity_1 and the entity_2, or the NSI 1 and the NSI 2) are managed by different second management nodes, the management node 201 may receive an activation request from the management node (e.g., any one of an N+1 level management system 402 of FIG. 4B or an NSMF 602 of FIG. 6B) which manages activated one or more higher-level entities (e.g., the entity_1, the NSI 1) among the second management nodes.

According to an embodiment, if multi-level entities including higher-level entities and lower-level entities are managed by one management node 201, the management node 201 may detect activation request occurrence inside the management node 201.

Operation 320 may include selectively activating the shared lower-level entity (e.g., the entity_3). In operation 320, the management node 201 (e.g., the control unit 220 of FIG. 2B) may activate the shared lower-level entity (e.g., the entity_3), in response to the activation request received in operation 310.

In an embodiment, the management node 201 may selectively (or partially) activate the lower-level entity only for a specific entity (e.g., the entity_1) among the higher-level entities sharing one lower-level entity (e.g., the entity_3). For example, the selective (or partial) activation and/or deactivation of the entity_3 for the specific higher-level entity (e.g., the entity_1) may be implemented, rather than binary activation of the whole entity_3 shared by multiple higher-level entities (e.g., the entity_1, the entity_2).

According to an embodiment, the management node 201 may allow a slicing entity (e.g., a lower-level entity) to perform the selective activation and/or deactivation. As a result, activation and/or deactivation of the lower-level entity may be performed only for a specific higher-level entity of the higher-level entities, not for all the higher-level entities sharing one lower-level entity.

According to an embodiment, the management node 201 may directly control the activation and/or deactivation of the slicing entity (e.g., a lower-level entity), or may induce the activation and/or deactivation of the slicing entity through the selective activation and/or deactivation of the network function (or the MF).

According to an embodiment, a method for performing deactivation of a shared lower-level entity, managed by the management node 201, may be provided. For example, the lower-level entity may be deactivated only if it is expected that all the higher-level entities sharing one lower-level entity are to be deactivated. In this method, the NSSI is presented as an example of the shared lower-level entity.

According to an embodiment, higher-level entities (e.g., the entity_1, the entity 2) may be managed by a plurality of different second management nodes (e.g., an embodiment of FIG. 7A). If the higher-level entities (e.g., the entity_1, the entity 2) are managed by several different second management nodes, operation 310 for receiving the activation request may include receiving an activation request of the shared lower-level entity (e.g., the entity_3) from the management node which manages one or more activated higher-level entities (e.g., the entity_1) among the second management nodes.

According to an embodiment, multi-level entities including higher-level entities (e.g., the entity_1, the entity 2) and lower-level entities (e.g., the entity_3) may be managed by one identical management node 201 (e.g., an embodiment of FIG. 7B). If the multi-level entities are managed solely by one management node 201, operation 310 for receiving the activation request may detect the activation request occurrence inside the management node 201.

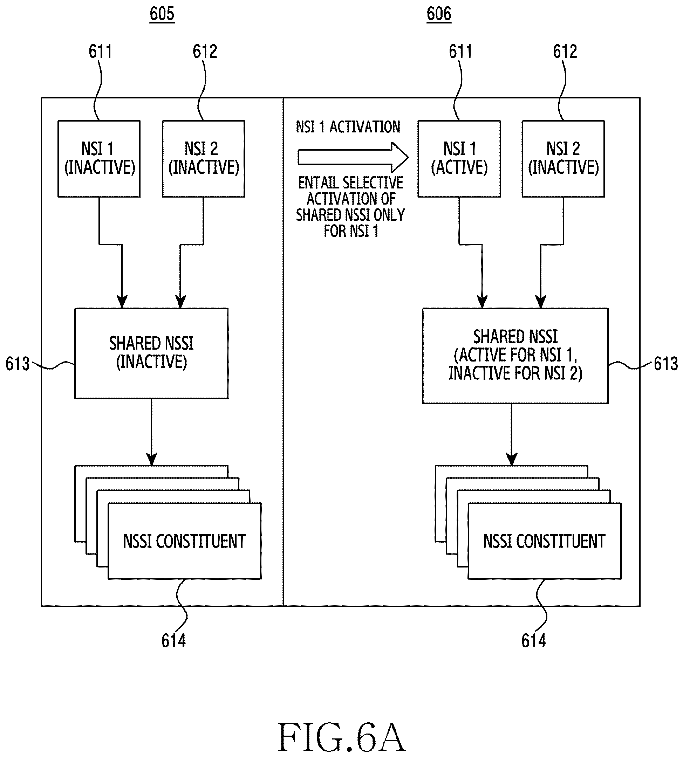

According to an embodiment, the management node 201 may include the NSSMF for managing the NSSI which is the shared lower-level entity (e.g., the entity_3). The selective activation operation 320 of the shared lower-level entity may include receiving an activation request of the NSSI for a specific NSI (e.g., the NSI 1) among the NSIs from the NSMF for managing NSIs which are the higher-level entities (e.g., an embodiment of FIG. 6A and FIG. 6B). Also, the selective activation operation 320 of the shared lower-level entity may include a selective activation operation of the NSSI. The selective activation operation of the NSSI may be an operation in which the NSSMF selectively (or partially) activates the NSSI shared by the NSIs only for a specific NSI (e.g., the NSI 1 corresponding to the entity 1).

In an embodiment, the selective activation operation 320 of the shared lower-level entity (e.g., the entity_3) may include a selective activation operation of MFs by a switching scheme of the EMS (e.g., an embodiment of FIG. 8A). The NSSMF corresponding to the management node 201 may transmit an MF activation request for the specific NSF to the EMS which manages the MFs, to thus enable the EMS to configure some of the MFs as the MF to be activated for the specific NSI in response to the MF activation request.

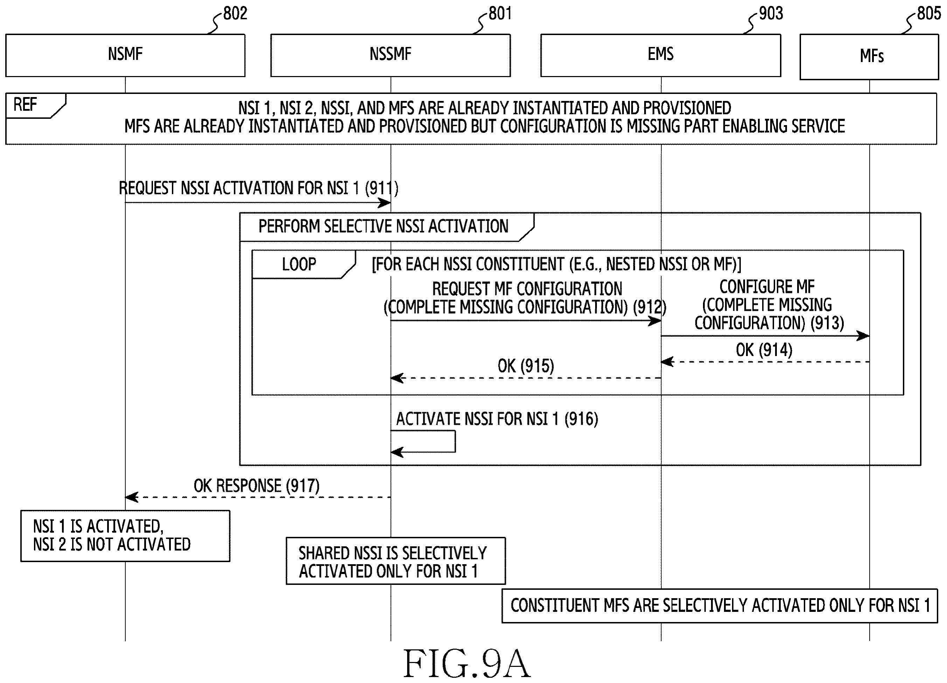

In an embodiment, the selective activation operation 320 of the shared lower-level entity (e.g., the entity_3) may include a selective activation operation of NFs by a configuration complete scheme (e.g., an embodiment of FIG. 9A). The NSSMF corresponding to the management node 201 may transmit an MF configuration request for a specific NSI to the EMS which manages the MFs, to thus enable the EMS to configure the MF for the specific NSI by leaving some of the MFs in response to the MF configuration request.

In an embodiment, the selective activation operation 320 of the shared lower-level entity (e.g., the entity_3) may include a selective activation operation of an NSSI or NFs by a network communication blocking or unblocking scheme (e.g., an embodiment of FIG. 10A). The NSSMF corresponding to the management node 201 may transmit a network reconfiguration request for enabling network communication related to the specific NSI to the network controller, to thus enable the network controller to reconfigure the network in response to the network reconfiguration request.

According to an embodiment, the selective activation operation 320 of the shared lower-level entity (e.g., the entity_3) may include activating a shared lower-level entity (e.g., the entity_3) only for an activated entity set (e.g., the first entity) of higher-level entities sharing the lower-level entity, and deactivating the shared lower-level entity (e.g., the entity_3) for the other deactivated entity set (e.g., the entity _2) of the higher-level entities.

According to an embodiment, the operating method of the management node in the wireless communication system may include receiving a deactivation request of a shared lower-level entity (e.g., the entity_3), and deactivating the shared lower-level entity (e.g., the entity _3) in response to the deactivation request. As one or more of the higher-level entities (e.g., the first entity and the second entity) are deactivated (e.g., the first entity), the management node 201 may receive the deactivation request of the lower-level entity (e.g., the entity_3) shared by the higher-level entities. The management node 201 may be configured to selectively (or partially) deactivating the shared lower-level entity (e.g., the entity_3) for the one or more deactivated higher-level entities (e.g., the first entity), in response to the deactivation request.

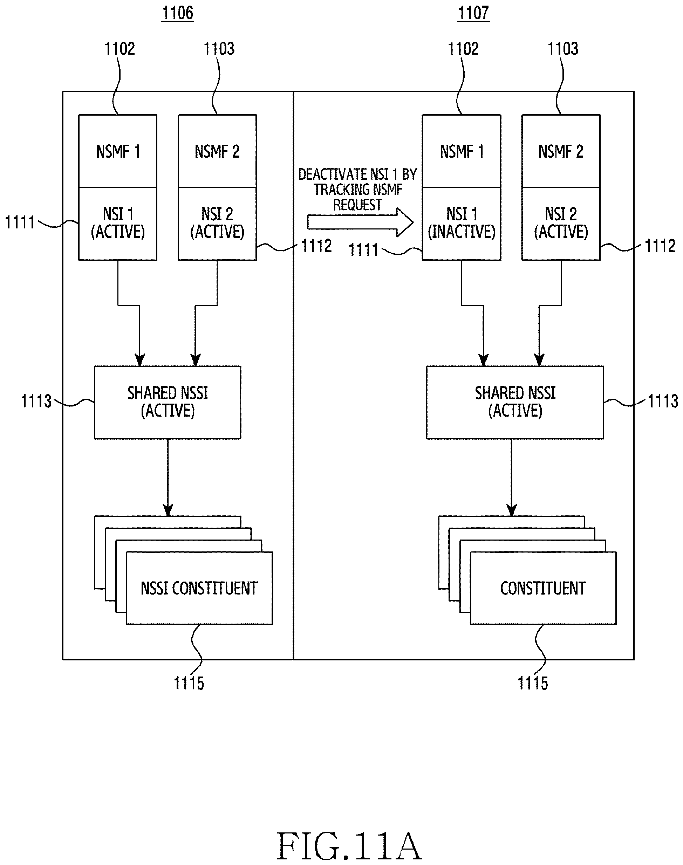

In an embodiment, the management node 201 may include the NSSMF for managing the NSSI which is the shared lower-level entity. In an embodiment, the NSSMF may identify whether the NSIs which are the higher-level entities sharing one NSSI are all deactivated. The NSSMF may deactivate the NSSI if the NSIs which are the higher-level entities sharing one NSSI being the shared lower-level entity are all deactivated, and may maintain the NSSI in the active state if all of the NSIs sharing the NSSI are not deactivated (e.g., an embodiment of FIG. 11A and FIG. 11B).

Hereafter, according to various embodiments, operations for selectively activating and/or deactivating entities of different levels in the network slicing environment of the wireless communication system are described, by referring to the drawings. The illustrated operations may be performed in sequence, but not necessarily. For example, the order of the operations may be altered, and at least two operations may be performed in parallel.

At least some of the operations for selectively activating and/or deactivating entities of different levels to be explained according to various embodiments may correspond to each other or may be performed in combination. In some embodiment, at least one of the illustrated operations may be omitted, the order of some operations may be altered, or other operation may be added.

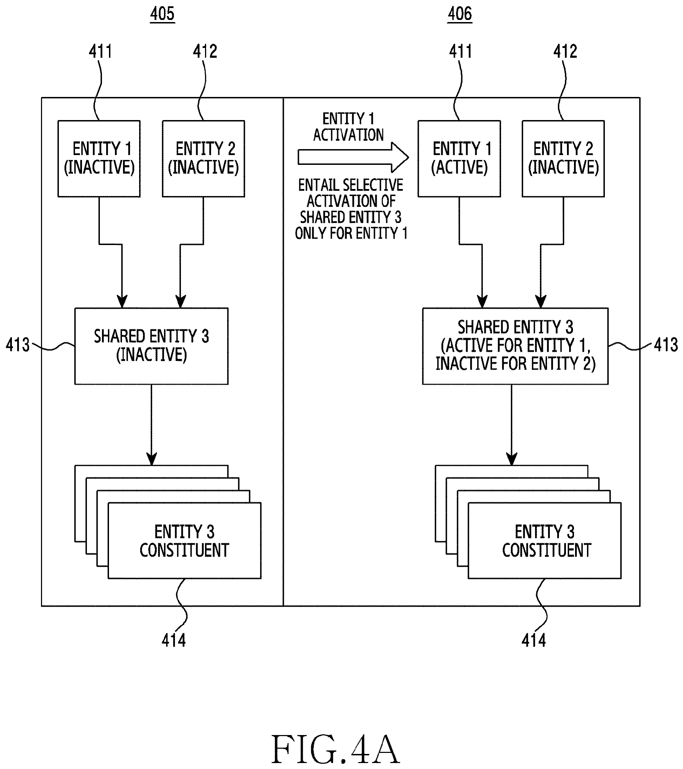

FIG. 4A and FIG. 4B are diagrams for illustrating a selective activation operation of a shared entity in a wireless communication system according to an embodiment.

Referring to FIG. 4A, the CN of the wireless communication system may include an entity_1 411, an entity_2 412, and an entity_3 413. The entity_1 411 and the entity_2 412 may be N+1-level entities, and the entity_3 413 may be an N-level entity. The entity_1 411 and the entity_2 412 may have sharability for the entity_3 413. The entity_3 413 may be an entity shared by the entity_1 411 and the entity_2 412. The entity_3 413 may include two or more constituents 414. For example, each constituent 414 of the entity_3 413 indicates a unit for processing at least one function or operation, and may be implemented using hardware, software, or a combination of hardware and software.

A first state 405 of FIG. 4A may deactivate all of the entity_1 411, the entity_2 412, and the shared entity_3 413. If the entity_1 411 is switched to the activation, the selective activation of the entity_3 413 may be entailed. Hence, it may switch from the first state 405 to a second state 406. In the second state 406, the entity_1 411 may be switched to the active state, and the entity_2 412 may be maintained in the inactive state. In the second state 406, the shared entity_3 413 may be selectively (or partially) activated, thus activating only for the entity_1 411 and keeping the deactivation for the entity_2 412.

According to an embodiment, each entity 411, 412, and 413 may be managed by a management system of a corresponding level. For example, the entity_1 411 and the entity_2 412 which are the N+1-level entities may be managed by the N+1-level management system 402 shown in FIG. 4B. The entity_3 which is the N-level entity, shared by the N+1-level entities, may be managed by the N-level management system 401 shown in FIG. 4B.

Referring to FIG. 4B, the selective activation operation of the entity_2 412 which is the shared entity may include operation 410, operation 420 and operation 430.

According to an embodiment, the management node 201 of FIG. 2B may include the N-level management system 401 of FIG. 4B. The N-level management system 401 may perform the selective activation operation of the shared entity_2 by interworking with the N+1-level management system 402.

According to an embodiment, the entity_1 411, the entity_2 412 and the entity_3 413 may be deactivated (e.g., the first state 402 of FIG. 4A). For example, the entity_1 411, the entity_2 412 and the entity_3 413 may be already instantiated and provisioned but may not serve users (the inactive state).

For example, the UE 110 of the user may concurrently connect to one or more network slice instances via the RAN 120 according to the provided service. If the UE 110 transmits user's service requirement information requested by the UE 110 to the CN 200 to be served from a specific network slice instance, the CN 200 may select an adequate network slice instance based on the received information. As the network slice instance is selected, the management systems 401 and 402 of the CN 200 may prepare in advance for immediate use by instantiating and provision corresponding entities, and allocating, placing, or distributing resources for the user's service requirement information. Even though the entities are instantiated and provisioned, the user may not be served (e.g., link blocking) before the activation. As the entities are instantiated and provisioned and then activated, the user may be served (e.g., link connection).

In operation 410, the N+1-level management system 402 may transmit an activation request of the entity_3 413 for the entity_1 411 to the N-level management system 401.

In operation 420, the N-level management system 401 may selectively activate the entity_3 413 in response to the activation request received in operation 410. By activating the entity_3 413 for the entity_1 411, the N-level management system 401 may selectively (or partially) activate only some constituent related to the entity_1 411 among the entity_3 constituents 414, and maintain other constituents in the inactive state.

In operation 430, the N-level management system 401 may transmit an OK response for the activation request of operation 410 to the N+1-level management system 402.

By activating the entity_3 413 for the entity_1 411 in operation 430, the entity _3 413 shared by the entity_1 411 and the entity_2 412 may be selectively activated only for the entity_1 411 (e.g., the second state 406 of FIG. 4A). Thus, the entity_1 411 may be switched to the active state, and the entity_2 412 may be maintained in the inactive state (e.g., the second state 406 of FIG. 4A).

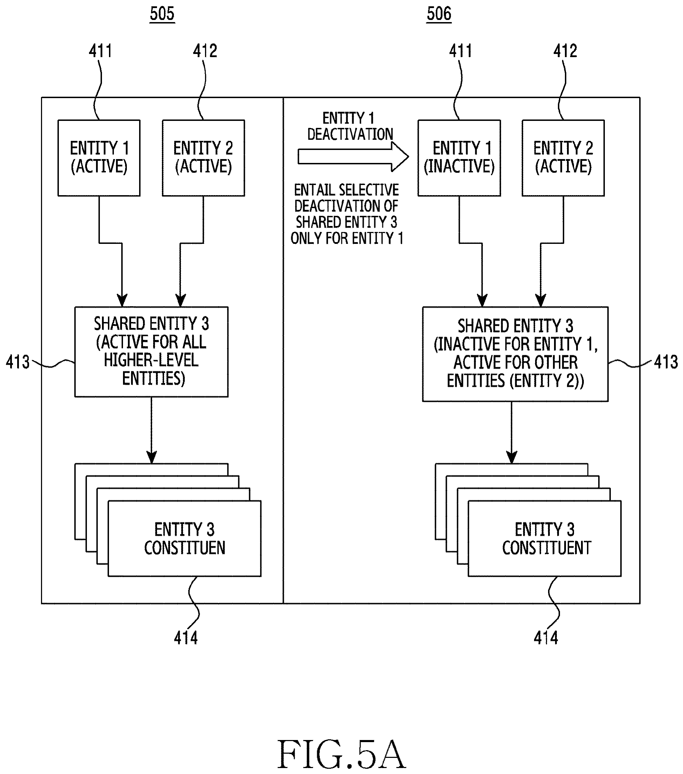

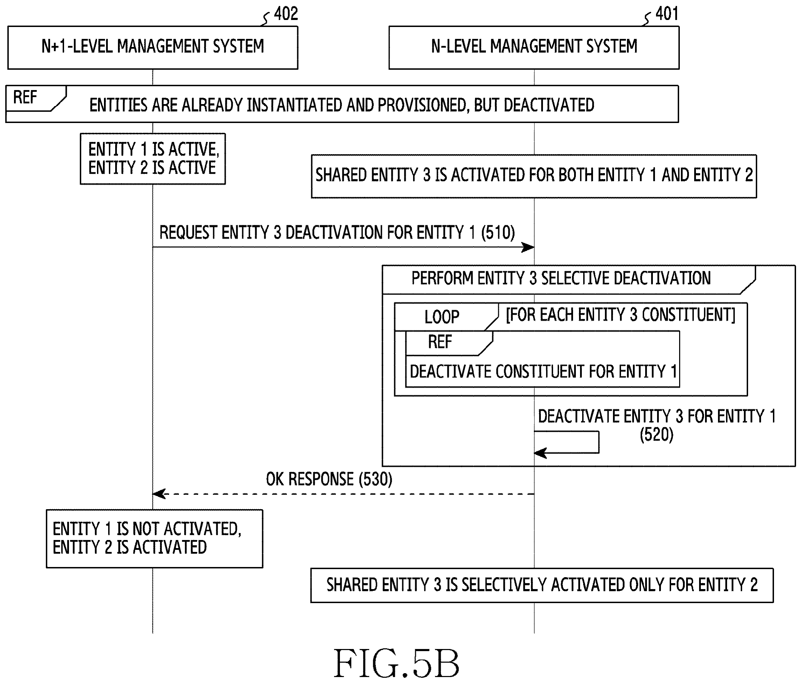

FIG. 5A and FIG. 5B are diagrams for illustrating a selective deactivation operation of a shared entity in a wireless communication system according to an embodiment.

In a first state 505 of FIG. 5A, the entity_1 411, the entity_2 412, and the entity_3 413 which is the shared entity may be activated. If the entity_1 411 is switched to the inactive state, the selective deactivation of the entity_3 413 may be entailed. Hence, it may switch from a first state 505 to a second state 506. In the second state 506, the entity_1 411 may be switched to the inactive state, and the entity_2 412 may be maintained in the active state. In the second state 506, the shared entity_3 413 may be selectively (or partially) deactivated, thus deactivating only for the entity _1 411 and still activating for the entity_2 413.

According to an embodiment, the management node 201 may include the N-level management system 401 of FIG. 5B. The N-level management system 401 may perform the selective deactivation operation of the shared entity_3 413 by interworking with the N+1-level management system 402.

Referring to FIG. 5B, the selective deactivation operation of the entity_3 413 which is the shared entity may include operation 510, operation 520 and operation 530.

According to an embodiment, the entity_1 411 and the entity_2 412 may be activated, and the shared entity_3 413 may be activated as a whole for both of the entity_1 411 and the entity_2 412 (e.g., the first state 505 of FIG. 5A). For example, the entity_1 411, the entity_2 412 and the entity_3 413 may be already instantiated and provisioned, and may serve to the user.

In operation 510, the N+1-level management system 402 may transmit a deactivation request of the entity_3 413 for the entity_1 411 to the N-level management system 401.

In operation 520, the N-level management system 401 may selectively deactivate the entity_3 413 in response to the deactivation request received in operation 510. By deactivating the entity_3 413 for the entity_1 411, the N-level management system 401 may selectively (or partially) deactivate only some constituent related to the entity_1 411 among the constituents of the entity_3 413, and maintain other constituents in the active state.

In operation 530, the N-level management system 401 may transmit an OK response for the deactivation request of operation 510 to the N+1-level management system 402.

By deactivating the entity_3 413 for the entity_1 411 in operation 530, the entity_3 413 shared by the entity_1 411 and the entity_2 412 may be selectively deactivated only for the entity_1 411 (e.g., the second state 506 of FIG. 5A). Hence, the entity_1 411 may be switched to the inactive state, and the entity_2 413 may be maintained in the active state (e.g., the second state 506 of FIG. 5A).

FIG. 6A and FIG. 6B are flowcharts illustrating a selective activation operation of one NSSI shared by multiple NSIs in a wireless communication system according to an embodiment.

The embodiment of FIG. 6A and FIG. 6B may apply the embodiment of FIG. 4A and FIG. 46B to concretized entities. For example, an NSI 1 611, an NSI 2 612, a shared NSSI 613 and an NSSI constituent 614 of FIG. 6A may correspond to the entity_1 411 (the higher-level entity), the entity_2 412 (the higher-level entity), the shared entity_3 413 (the lower-level entity) and the entity_3 constituent 414 (the constituent of the lower-level entity) of FIG. 4A. An NSMF shown in FIG. 6B is a device for managing the NSI 1 611 and the NSI 2 612 of the higher level, and may correspond to the N+1-level management system 402 of FIG. 4A. The NSSMF 601 shown in FIG. 6B is a device for managing the lower-level shared NSSMF 602, and may correspond to the N-level management system 401 of FIG. 4A. Operation 610, operation 620, and operation 630 shown in FIG. 6B may correspond to operation 410, operation 420 and operation 430 of FIG. 4A, respectively.

In a first state 605 of FIG. 6A, the NSI 1 611, the NSI 2 612, and the shared NSSI 613 may be deactivated. If the NSI 1 611 is switched to the active state, the selective activation of the shared NSSI 613 may be entailed. Accordingly, it may switch from the first state 605 to a second state 606. In the second state 606, the NSI 1 611 may be switched to the active state, and the NSI 2 612 may be maintained in the inactive state. In the second state 606, the shared NSSI 613 may be selectively (or partially) activated, thus activating only for the NSI 1 611 and deactivating for the the NSI 2 613.

Referring to FIG. 6B, the selective activation operation of the shared NSSI 613 may include operation 610, operation 620 and operation 630.

In an embodiment, the NSI 1 611, the NSI 2 612 and the shared NSSI 613 may be deactivated (e.g., the first state 605 of FIG. 6A). For example, the NSI 1 611, the NSI 2 612, and the shared NSSI 613 may be already instantiated and provisioned, but may not serve users (the inactive state).

In operation 610, the NSMF 602 for managing the NSI 1 611 and the NSI 2 612 may transmit an activation request of the NSSI 613 for the NSI 1 611 to the NSSMF 601 managing the shared NSI 3 613.

In operation 620, the NSSMF 601 may selectively activate the NSSI 613 in response to the activation request received in operation 610. By activating the NSSI 613 for the NSI 1 611, the NSSMF 601 may selectively (or partially) activate only some constituent related to the NSI 1 611 among the NSSI constituents 614, and maintain other constituents in the inactive state.

In operation 630, the NSSMF 601 may transmit an OK response for the activation request of operation 610 to the NSMF 602.

By activating the NSSI 613 for the NSI 1 611 in operation 630, the NSSI 613 shared by the NSI 1 611 and the NSI 2 612 may be selectively activated only for the NSI 1 611 (e.g., the second state 606 of FIG. 6A). Thus, the NSI 1 611 may be switched to the active state, and the NSI 2 612 may be maintained in the inactive state (e.g., the second state 606 of FIG. 6A).

FIG. 7A is a flowchart illustrating a selective activation operation of a shared entity if higher-level entities are managed by different management systems in a wireless communication system according to an embodiment.

According to an embodiment, the CN of the wireless communication system may include a plurality of management systems. Higher-level (e.g., N+1-level) entities sharing a lower-level (e.g., N-level) entity may be managed by different management systems. In this case, the selective activation performed on the higher-level entity managed by one management system may not affect other higher-level entity managed by other management system.

Referring to FIG. 7A, the multiple N+1-level entities, for example, an entity_1 through an entity_N may be managed by an NSMF 702 and an NSMF(s) 703 which are different management systems. A shared entity_X of the N level may be managed by an NSSMF 701. The NSSMF 701 may perform the selective activation operation of the shared entity_X by interworking with the NSMF 702 and/or the NSMF(s) 703.

Referring to FIG. 7A, if higher-level entities are managed by different management systems, the selective activation operation of the shared entity_X may include operation 710, operation 720 and operation 730.

In an embodiment, the entity_1 through the entity_N of the N+1 level, and the entity_X of the N level may be already instantiated and provisioned but may not serve users (the inactive state).

In operation 710, the NSMF 702 managing the entity_1 may transmit an entity_X activation request for the entity_1 to the NSSMF 701 managing the entity_X.

In operation 720, the NSSMF 701 may selectively activate the entity_X in response to the activation request received in operation 710. By activating the entity_X for the entity_1, the NSSMF 701 may selectively (or partially) activate only some constituent related to the entity_1 among entity_X constituents, and maintain other constituents in the inactive state.

In operation 730, the NSSMF 701 may transmit an OK response for the activation request of operation 710 to the NSMF 702.

By activating the entity_X for the entity_1 in operation 730, the entity_X shared by the entity_1 and the entity_N may be selectively activated only for the entity_1. Thus, the entity_1 may be activated to provide the service, and the entity_2 through the entity_N may be maintained in the inactive state.

As such, at the request of the NSMF 701 managing the entity_1, the NSSMF 701 may selectively (or partially) activate the entity_X shared by all of the entity_1 through the entity_N only for the entity_1. This selective activation operation of the N-level entity_X may be performed only on the N+1-level entity_1 managed by the NSMF(s) 703 which is one management system, and may not affect the entity_2 through the entity_N which are other N+1-level entities managed by the NSMF(s) 703 which is another management system.

FIG. 7B is a flowchart illustrating the selective activation operation of the shared entity if multi-level entities are managed by one management system in the wireless communication system according to an embodiment.

According to an embodiment, multiple slicing entities may be managed by a single management system in a CN hierarchy of the wireless communication system.

Referring to FIG. 7B, multiple slicing entities with different levels, for example, an entity_1, an entity_2, and an entity_3 may be managed by one management function 705. The entity_3 of the N level may be an entity shared by the entity_1 of the N+1 level and the entity_2 of the N+1 level.

Referring to FIG. 7B, if the multi-level entities are managed by the single management system, the selective activation operation of the shared entity_3 may include operation 711, operation 721 and operation 731.

In an embodiment, the entity_1, the entity_2, and the entity_3 may be already instantiated and provisioned, but may not serve users (the inactive state).

In operation 711, the management function 705 managing the entity_1, the entity_2, and the shared entity_3 may detect entity_3 activation request occurrence for the entity_1.

In operation 721, the management function 705 may selectively activate the entity_3 in response to the activation request detected in operation 711. By activating the entity_3 for the entity_1, the management function 705 may selectively (or partially) activate only some constituent related to the entity_1 among the entity_3 constituents, and maintain other constituents in the inactive state.

In operation 731, the management function 705 may feed an OK response back for the activation request occurred operation 711. By activating the entity_3 for the entity_1 in operation 731, the entity_3 shared by the entity_1 and the entity_2 may be selectively activated only for the entity_1. Hence, the entity_1 may be activated to provide the service, and the entity_2 may be maintained in the inactive state.

FIG. 8A is a flowchart illustrating a selective activation operation of MFs by a switching scheme supported by an EMS in a wireless communication system according to an embodiment.

According to an embodiment, support of a lower-level (or lower-layer) management system (e.g., an EMS 803 of FIG. 8A) may be required for selective activation of a shared entity (e.g., NSSI) in the network slicing environment.

According to an embodiment, the NSSI may group constituent MFs (or managed function instances (MFIs)) which are configurable entities. For the whole activation of the NSSI, it may be necessary to configure all the configurable MFs which are the lower-level entities. The selective (or partial) activation of the NSSI may be implemented with a scheme which configures only some of the configurable MFs. In an embodiment, the selective activation of the NSSI lower level may be supported.

Referring to FIG. 8A, the CN of the wireless communication system may include an NSMF 802 for managing an NSI 1 and an NSI 2, the NSSMF 801 for managing a shared NSSI, an EMS 803 for managing MFs 805, and the MFs 805. The NSI 1 and the NSI 2 may be higher-level (e.g., N+1-level) entities than the NSSI. The NSSI may be lower-level (e.g., N-level) entities than the NSI 1 and the NSI 2. The NSSI may include the MFs 805 which are lower-level (e.g., N-1-level) entities of the NSSI. The EMS 802 may support the selective switch scheme for each of the MFs 805 which are the lower-level entities of the shared entity.

Referring to FIG. 8A, the selective activation operation of the shared entity by the selective activation switch scheme supported by the EMS 803 may include operation 811, operation 812, operation 813, operation 814, operation 815 and operation 816.

In an embodiment, the NSI 1 and the NSI 2 which are the N+1-level entities may be already instantiated and provisioned but may not serve users (the inactive state).

In operation 811, the NSMF 802 managing the NSI 1 and an NSI 2 may transmit an NSSI activation request for the NSI 1 to the NSSMF 801 managing the NSSI.

In an embodiment, the NSSMF 801 may perform the selective NSSI activation operation in response to the activation request received in operation 811. The selective NSSI activation operation may include operation 812, operation 813, operation 814, operation 815 and operation 816.

In operation 812, the NSSMF 801 may transmit an MF activation request for the NSSI 1 to the EMS 803 which manages the MFs 805. In operation 813, the EMS 803 may configure an MF to be activated for the NSI 1 with the scheme for selectively switching only some of the MFs 805. In operation 814 and operation 815, the EMS 803 may receive an OK signal notifying MF configuration complete to be activated for the NSI 1 from the MFs 805 and forward it to the NSSMF 801. In operation 816, upon receiving the OK signal from the EMS 803, the NSSMF 801 may activate the NSSI for the NSI 1.

In operation 817, the NSSMF 801 may transmit an OK response for the activation request of operation 812 to the NSMF 802.

Through the above process, the MFs 805 which are the lower-level entities of the NSSI may be selectively activated only for the NSI 1. Hence, the NSSI which is the higher-level entity of the MFs 805 may be also selectively activated only for the NSI 1. According to the selective activation of the NSSI, the NSI 1 may be activated to switch to provide the service, and the NSI 2 may be maintained in the inactive state.

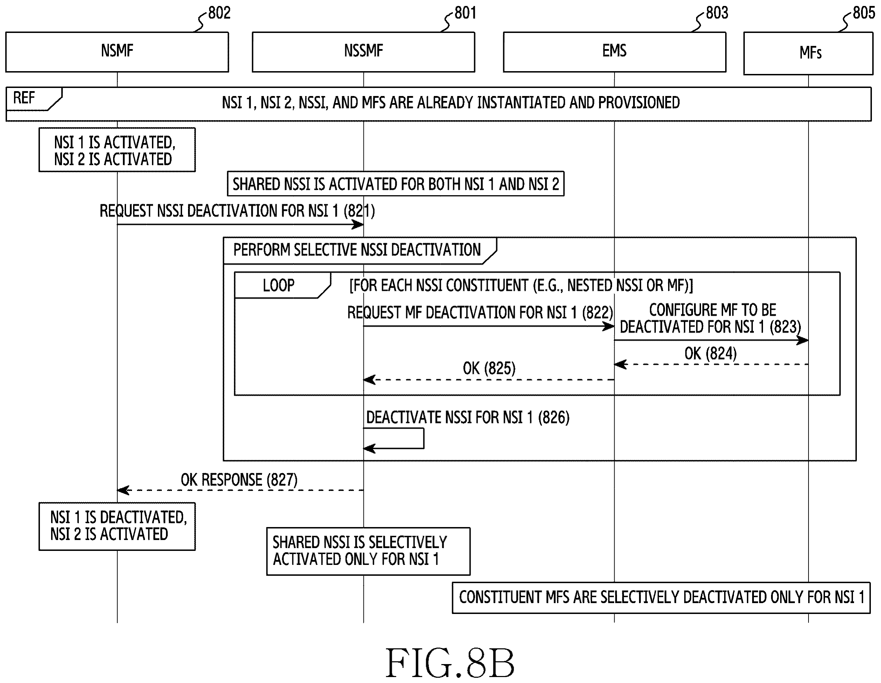

FIG. 8B is a flowchart illustrating the selective deactivation operation of the MFs by the switching scheme supported by the EMS in the wireless communication system according to an embodiment.

Referring to FIG. 8B, the selective deactivation operation of the shared entity by the selective activation switching scheme supported by the EMS 803 may include operation 821, operation 822, operation 823, operation 824, operation 825, operation 826 and operation 827.

In an embodiment, the NSI 1, the NSI 2, the NSSI and the MFs may be already instantiated and provisioned to serve the users (the active state).

In operation 821, the NSMF 802 managing the NSI 1 and an NSI 2 may transmit an NSSI deactivation request for the NSI 1 to the NSSMF 801 which manages the NSSI.

In an embodiment, the NSSMF 801 may perform the selective NSSI deactivation operation in response to the deactivation request received in operation 811. The selective NSSI deactivation operation may include operation 822, operation 823, operation 824, operation 825 and operation 826.

In operation 822, the NSSMF 801 may transmit an MF activation request for the NSSI 1 to the EMS 803 which manages the MFs 805. In operation 823, the EMS 803 may configure an MF to be activated for the NSI 1 with the scheme for selectively switching only some of the MFs 805. In operation 824 and operation 825, the EMS 803 may receive an OK signal notifying MF configuration complete to be activated for the NSI 1 from the MFs 805 and forward it to the NSSMF 801. In operation 826, the NSSMF 801, upon receiving the OK signal from the EMS 803, may activate the NSSI for the NSI 1.

In operation 827, the NSSMF 801 may transmit an OK response for the activation request of operation 812 to the NSMF 802.

Through the above process, the MFs 805 which is the lower-level entity of the NSSI may be selectively activated only for the NSI 1. Hence, the NSSI which is the higher-level entity of the MFs 805 may be also selectively activated only for the NSI 1. According to the selective activation of the NSSI, the NSI 1 may be activated to provide the service, and the NSI 2 may be maintained in the inactive state.

FIG. 9A is a flowchart illustrating a selective activation operation of MFs by a completing configuration, or missing configuration scheme in a wireless communication system according to an embodiment.

Some communication standards may limit the selective switch scheme by the lower-level entity management system (e.g., the EMS). In this case, the selective activation of the shared entity may be implemented by completing configuration.

According to an embodiment, to implement the selective activation of the shared entity, only partially configuring the MFs may be included, as part of the instantiation and provisioning operations. In an embodiment, the selective activation of the NSSI level may be supported. For example, only some of the configurable MFs (N-1 level) which are the lower-level entities of the NSSI (N level) may be partially configured, and others may miss configuration. Due to the missing configuration, corresponding MFs may not serve users.

Referring to FIG. 9A, the CN of the wireless communication system may include an EMS 903. The EMS 903 may be a lower-level management system for managing the MFs 805 which are the lower-level entities of the shared entity.

Referring to FIG. 9A, the selective activation operation of the shared entity by completing the configuration may include operation 911, operation 912, operation 913, operation 914, operation 915, operation 916 and operation 917.

In an embodiment, the NSI 1 and the NSI 2 which are the N+1-level entities may be already instantiated and provisioned. The MFs are already instantiated and provisioned, but may miss a portion which enables the service in the configuration and may not serve the users (the inactive state).

In operation 911, the NSMF 802 managing the NSI 1 and an NSI 2 may transmit an NSSI activation request for the NSI 1 to the NSSMF 801 which manages the NSSI.

In an embodiment, the NSSMF 801 may perform the selective NSSI activation operation in response to the activation request received in operation 911. The selective NSSI activation operation may include operation 912, operation 913, operation 914, operation 915 and operation 916.

In operation 912, the NSSMF 801 may transmit an MF configuration request to the EMS 803 which manages the MFs 805. Th request may request to complete missing configuration. In operation 913, the EMS 903 may configure an MF with the scheme for adding only some of the MFs 805 to the configuration and missing others. In operation 914 and operation 915, the EMS 903 may receive an OK signal notifying the missing configuration complete from the MFs 805 and forward it to the NSSMF 801. In operation 916, upon receiving the OK signal from the EMS 903, the NSSMF 801 may activate the NSSI for the NSI 1.

In operation 917, the NSSMF 801 may transmit an OK response for the activation request of operation 911 to the NSMF 802.

Through the above process, the MFs 805 which is the lower-level entity of the NSSI may be selectively activated only for the NSI 1. Hence, the NSSI which is the higher-level entity of the MFs 805 may be also selectively activated only for the NSI 1. By the selective activation of the NSSI, the NSI 1 may be activated to provide the service, and the NSI 2 may be maintained in the inactive state.

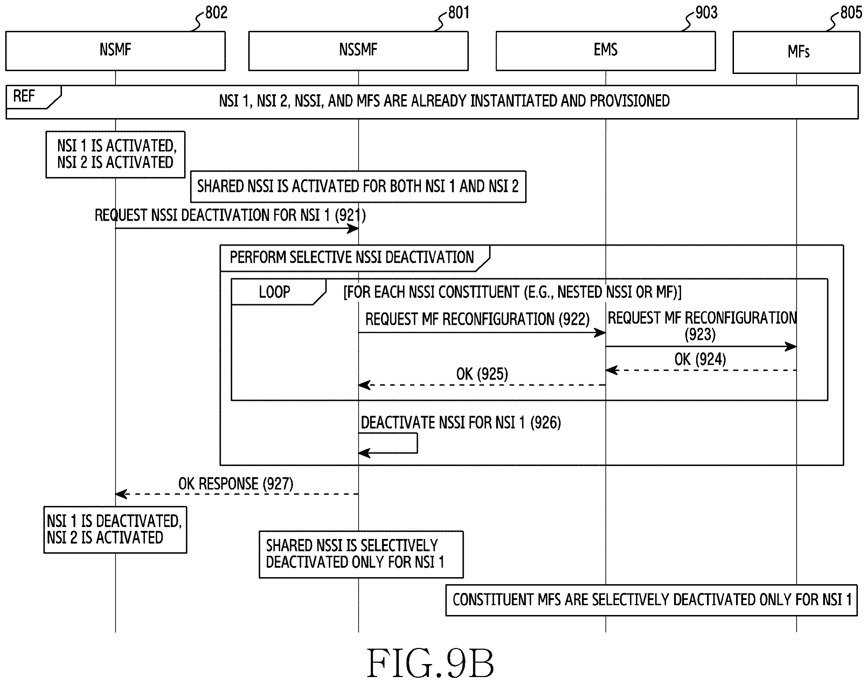

FIG. 9B is a flowchart illustrating a selective deactivation operation of MFs by completing the configuration (or missing the configuration) in the wireless communication system according to an embodiment.

According to an embodiment, to implement the selective deactivation of the NSSI which is the shared entity, removing some configuration of the MFs constituting the NSSI may be included. The corresponding operation may prevent the MFs from serving users with respect to the NSSI which is the higher-level entity.

Referring to FIG. 9B, the selective deactivation operation of the shared entity by completing the configuration may include operation 921, operation 922, operation 923, operation 924, operation 925, operation 926 and operation 927.

In an embodiment, the NSI 1, the NSI 2, the NSSI and the MFs may be already instantiated and provisioned to serve the users (the active state).

In operation 921, the NSMF 802 managing the NSI 1 and the NSI 2 may transmit an NSSI deactivation request for the NSI 1 to the NSSMF 801 which manages the NSSI.

In an embodiment, the NSSMF 801 may perform the selective NSSI deactivation operation in response to the deactivation request received in operation 811. The selective NSSI deactivation operation may include operation 922, operation 923, operation 924, operation 925 and operation 926.

In operation 922, the NSSMF 801 may transmit an MF reconfiguration request (or a request for removing partial configuration) to the EMS 803 which manages the MFs 805. In operation 923, the EMS 803 may reconfigure the MF by removing some of the MFs 805 in the configuration. In operation 924 and operation 925, the EMS 903 may receive an OK signal notifying MF reconfiguration complete (or partial configuration removing complete) from the MFs 805 and forward it to the NSSMF 801. In operation 926, the NSSMF 801, upon receiving the OK signal from the EMS 903, may deactivate the NSSI for the NSI 1. In operation 927, the NSSMF 801 may transmit an OK response for the deactivation request of operation 912 to the NSMF 802.

Through the above process, the MFs 805 which are the lower-level entities of the NSSI may be selectively deactivated only for the NSI 1. Hence, the NSSI which is the higher-level entity of the MFs 805 may be also selectively deactivated only for the NSI 1. According to the selective deactivation of the NSSI, the NSI 1 may be deactivated not to provide the service, and the NSI 2 may be maintained in the active state.

FIG. 10A is a flowchart illustrating a selective activation operation of an NSSI or MFs by a network communication blocking or unblocking scheme in a wireless communication system according to an embodiment.

Some communication standards may limit the selective switch scheme by the lower-level entity management system (e.g., the EMS). In this case, the selective activation of the NSSI or the shared entity may be implemented by blocking or unblocking the network communication.

According to an embodiment, to implement the selective activation of the shared entity, an operation for blocking or unblocking the network communication may be included, as part of the instantiation and provisioning operations. In an embodiment, the selective activation of the NSSI level may be supported. For example, a network connectivity part of the NSSI or the MF may be modified, for the selective activation of the NSSI level. The NSSI or MF instantiation and provisioning may leave corresponding entities fully operable, but the network part of the configuration may be missed or altered. Such network configuration may interrupt communication with other constituents of the service not to serve the users. The activation operation may complete missing configuration or modify missing configuration. This activation operation may activate nominal connectivity for a specific higher-level entity, and thus allow the NSSI or the MF to fully serve the user.

Referring to FIG. 10A, the CN of the wireless communication system may include an NSMF 1002 for managing an NSI 1 and an NSI 2, an NSSMF 1001 for managing a shared NSSI, a network controller 1003, a network 1004, an EMS 1005 and MFs 1006. The NSI 1 and the NSI 2 may be higher-level (e.g., N+1-level) entities than the NSSI. The NSSI may be a lower-level (e.g., N-level) entity than the NSI 1 and the NSI 2.

Referring to FIG. 10A, the selective activation operation of the shared entity by blocking or unblocking the network communication may include operation 1011, operation 1012, operation 1013, operation 1014, operation 1015, operation 1016 and operation 1017.

In an embodiment, the NSI 1, the NSI 2, the NSSI, and the MFs may be all instantiated and provisioned but may not serve users (the inactive state). The network 1004 (e.g., a specific network slice or subnet) may be configured to block every service traffic (or communication) for the NSI 1 and the NSI 2.

In operation 1011, the NSMF 1002 managing the NSI 1 and the NSI 2 may transmit an NSSI activation request for the NSI 1 to the NSSMF 1001 which manages the NSSI.

In an embodiment, the NSSMF 1001 may perform the selective NSSI activation operation in response to the activation request received in operation 1011. The selective NSSI activation operation may include operation 1012, operation 1013, operation 1014, operation 1015 and operation 1016.

In operation 1012, the NSSMF 1001 may transmit a network reconfiguration request to the network controller 1003, to enable the service traffic (or communication) for the NSI 1. In operation 1013, the network controller 1003 may reconfigure the network 1004 to unlock the service traffic for the NSI 1. In operation 1014 and operation 1015, the network controller 1003 may receive an OK signal from the reconfigured network 1004 and forward it to the NSSMF 1001. In operation 1016, upon receiving the OK signal from the network controller 1003, the NSSMF 1001 may activate the NSSI for the NSI 1.

In operation 1017, the NSSMF 1001 may transmit an OK response for the activation request of operation 1011 to the NSMF 1002.

Through the above process, the NSI 1 may be activated, and the NSI 2 may not be activated. The shared NSSI may be selectively (or partially) activated only for the NSI 1. The reconfiguration of the network 1004 may enable the communication only for the service related to the NSI 1.

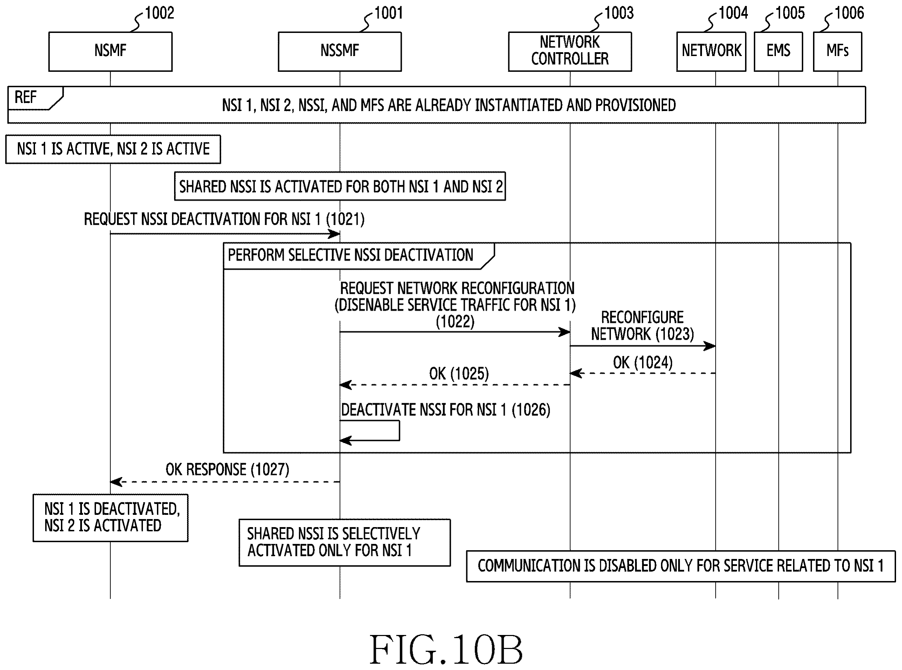

FIG. 10B is a flowchart illustrating a selective deactivation operation of the NSSI or the MFs by blocking or unblocking the network communication in the wireless communication system according to an embodiment.

Referring to FIG. 10B, the selective deactivation operation of the shared entity by blocking or unblocking the network communication may include operation 1021, operation 1022, operation 1023, operation 1024, operation 1025, operation 1026 and operation 1027.

In an embodiment, the NSI 1, the NSI 2, the NSSI and the MFs may be all instantiated and provisioned to serve the users (the active state).

In operation 1021, the NSMF 1002 managing the NSI 1 and an NSI 2 may transmit an NSSI deactivation request for the NSI 1 to the NSSMF 1001 which manages the NSSI.

In an embodiment, the NSSMF 801 may perform the selective NSSI deactivation operation in response to the deactivation request received in operation 1021. The selective NSSI deactivation operation may include operation 1022, operation 1023, operation 1024, operation 1025 and operation 1026.

In operation 1022, the NSSMF 1001 may transmit an MF reconfiguration request to the network controller 1003, to disable the service traffic (or communication) for the NSI 1. In operation 1023, the network controller 1003 may reconfigure the MF to block the service traffic for the NSI 1. In operation 1024 and operation 1025, the network controller 1003 may receive an OK signal from the reconfigured network 1004 and forward it to the NSSMF 1001. In operation 1026, the NSSMF 1001 upon receiving the OK signal from the network controller 1003 may deactivate the NSSI for the NSI 1.

In operation 1027, the NSSMF 1001 may transmit an OK response for the deactivation request of operation 1021 to the NSMF 1002.

Through the above process, the NSI 1 may be deactivated, and the NSI 2 may be maintained in the active state. The shared NSSI may be selectively (or partially) deactivated only for the NSI 1. The reconfiguration of the network 1004 may disable the communication only for the service related to the NSI 1.

According to an embodiment, the network communication blocking (or service traffic blocking) scheme may be implemented as follows.
- configuring hardware or software firewall to block specific network traffic
- disabling interfaces of hardware or software switches and routers
- configuring routing protocol, routing policy or static routing to block or blackhole specific traffic on hardware or software switch or router
- configuring an internal firewall on virtual machine constituting MF to block specific network traffic
- disabling interface on virtual machine constituting MF
- configuring routing protocol, routing policy or static routing to block or blackhole specific traffic on virtual machine constituting MF

According to an embodiment, the network communication unblocking (or service traffic unblocking) scheme may be implemented as follows.
- configuring hardware or software firewall to unblock specific network traffic
- enabling interface on hardware or software switch and router
- configuring routing protocol, routing policy or static routing to allow and route specific traffic on hardware or software switch or router
- configuring internal firewall on virtual machine constituting MFs to allow specific network traffic
- enabling interface on virtual machine constituting MF which configures routing protocol, routing policy or static routing to allow and route specific traffic on virtual machine constituting MF

FIG. 11A and FIG. 11B are diagrams for illustrating a selective deactivation operation of an NSSI by a consensus scheme of an NSMF in a wireless communication system according to an embodiment.

Control on the deactivation may be improved using the NSMF request consensus scheme if some communication standards do not support the selective per-NSI activation and deactivation schemes. A higher-level management node (e.g., an NSMF) may not know about other higher-level management node (e.g., another NSMF) which shares a lower-level entity (e.g., an NSSI). In this case, each higher-level management node may request the deactivation from the lower-level management node (e.g., the NSSMF) only based on an intended state of its managed entity (e.g., the NSI). The lower-level management node (e.g., the NSSMF) managing the shared entity (e.g., an NSSMF) may prevent its managed entity (e.g., the NSSI) from deactivating while some of higher-level entities are still activated.

Referring to FIG. 11A, an NSI 1 1111 is an N+1-level entity, and may be an entity managed by an NSMF 1 1102. An NSI 2 1112 is an N+1-level entity, and may be an entity managed by an NSMF 2 1103. An NSSI 1113 may be an N-level entity, shared by the NSI 1 and the NSI 2. The NSSI 1113 may include NSSI constituents 1115.

In a first state 1106 of FIG. 11A, the NSI 1 1111, the NSI 2 1112 and the shared NSSI 1113 may be all activated. By performing an NSI 1 deactivation with NSMF request tracking, the first state 1106 may be switched to a second state 1107. In the second state 1107, only the NSI 1 may be deactivated, and the NSI 2 may be maintained in the active state.

Referring to FIG. 11B, the CN of the wireless communication system may include an NSMF 1 1102 for managing the NSI 1 1111, an NSMF 2 1103 for managing the NSI 2, the NSSMF 1101 for managing the shared NSSI 1113, an EMS 1104 for managing MFs of the NSSI, and the MFs 1105 managed by the EMS 1104.

Referring to FIG. 11B, the activation operation with the NSMF request tracking may include an NSI 1 activation operation 1131 and/or an NSI 2 activation operation 1132.

The NSI 1 activation operation 1131 may include operation 1121 and operation 1122.

In operation 1121, the NSMF 1 1102 managing the NSI 1 1111 may transmit an activation request of the NSSI 1113 to the NSSMF 1101 which manages the NSSI 1113 which is the shared lower-level entity. Upon receiving the activation request, the NSSMF 1101 for managing the NSSI 1113 which is the shared lower-level entity may store information (e.g., a system ID of the NSMF 1 1102 and/or an entity ID of the NSI 1) of the NSMF 1 1102 transmitting the request to activate the NSSI 1113 instead of the NSI 1. If the managed NSSI 1113 is already deactivated, the NSSMF 1101 may perform the NSSI activation in response to the request. In operation 1122, the NSSMF 1101 may transmit an OK response for the activation request of operation 1121 to the NSMF 1 1102.

The NSI 2 activation operation 1132 may include operation 1123 and operation 1124.

In operation 1123, the NSMF 2 1103 managing the NSI 2 1112 may transmit an activation request of the NSSI 1113 to the NSSMF 1101 which manages the shared NSSI 1113. Upon receiving the activation request, the NSSMF 110 may store information (e.g., a system ID of the NSMF 2 1103 and/or an entity ID of the NSI 2) of the NSMF 2 1103 transmitting the request to activate the managed NSSI 1113 instead of the NSI 2. In operation 1124, the NSSMF 1101 may transmit an OK response for the activation request of operation 1123 to the NSMF 2 1103.

Referring to FIG. 11B, the deactivation operation with the NSMF request tracking may include an NSI 1 deactivation operation and/or an NSI 2 deactivation operation.

The NSI 1 deactivation operation 1133 may include operation 1125 and operation 1126.

In operation 1125, the NSMF 1 1102 may transmit a deactivation request of the NSSI 1113 to the NSSMF 1101. Upon receiving the deactivation request, the NSSMF 1101 which is the lower-level management node may store information (e.g., a system ID of the NSMF 1 1102 and/or an entity ID of the NSI 1 1111) of the NSMF 1 1102 transmitting the request to activate the NSSI 1113 instead of the NSI 1. In operation 1126, the NSSMF 1101 may transmit an OK response for the deactivation request of operation 1125 to the NSMF 1 1102.

The NSI 2 deactivation operation 1134 may include operation 1127 and operation 1128.

In operation 1127, the NSMF 1 1102 may transmit a deactivation request of the NSSI 1113 to the NSSMF 1101. If receiving the deactivation request from the NSMF 1 1102, the NSSMF 1101 may delete the information (e.g., the system ID of the NSMF 1 1102 and/or the NSI 1 1111) of the NSMF 1 1102 stored for the activation. If the corresponding information is deleted all and there is no more intention to activate the NSMF 1 1102 and the NSMF 2 1103 for the management, the NSSMF 1101 may perform the deactivation of the NSSI 1113 shared by the NSMF 1 1102 and the NSMF 2 1103. In operation 1128, the NSSMF 1101 may transmit an OK response for the deactivation request of operation 1127 to the NSMF 1102.

An operating method of a management node according to various embodiments may be an operating method of a management node in a wireless communication system with a network slicing environment. The method may include, as one or more of multiple higher-level entities sharing a lower-level entity managed by the management node are activated, receiving an activation request of the shared lower-level entity, and activating the shared lower-level entity for the one or more activated higher-level entities, in response to the activation request.

According to various embodiments, receiving the activation request may include, if the higher-level entities are managed by different second management nodes, receiving the activation request from a management node which manages the one or more activated higher-level entities among the second management nodes.

According to various embodiments, receiving the activation request may include, if multi-level entities including the higher-level entities and the lower-level entities are managed by the management node, detecting occurrence of the activation request inside the management node.

According to various embodiments, the management node may include an NSSMF for managing an NSSI which is the lower-level entity. Receiving the activation request may include receiving, at the NSSMF, from an NSMF which manages NSIs which are the higher-level entities, an activation request of the NSSI for a specific NSI of the NSIs. Activating may include partially activating, at the NSSMF, the NSSI shared by the NSIs only for the specific NSI.

According to various embodiments, partially activating, at the NSSMF, the NSSI shared by the NSIs only for the specific NSI may include transmitting, at the NSSMF, an MF activation request for the specific NSI to an EMS which managed MFs, to allow the EMS to configure some of the MFs as an MF to activate for the specific NSI in response to the MF activation request.

According to various embodiments, partially activating, at the NSSMF, the NSSI shared by the NSIs only for the specific NSI may include transmitting, at the NSSMF, an MF configuration request for the specific NSI to the EMS which manages the MFs, to allow the EMS to configure an MF for the specific NSI by missing some of the MFs in response to the MF configuration request.

According to various embodiments, partially activating, at the NSSMF, the NSSI shared by the NSIs only for the specific NSI may include transmitting, at the NSSMF, a network reconfiguration request for enabling network communication related to the specific NSI to a network controller, to allow the network controller to reconfigure a network in response to the network reconfiguration request.

According to various embodiments, activating may include activating the shared lower-level entity only for an activated entity set among the higher-level entities, and deactivating the shared lower-level entity for other deactivated entity set among the higher-level entities.

According to various embodiments, the method may include, as one or more of the higher-level entities are deactivated, receiving a deactivation request of the shared lower-level entity, and in response to the deactivation request, deactivating the shard lower-level entity for the one or more deactivated higher-level entities.

According to various embodiments, the management node may include the NSSMF for managing the NSSI which is the lower-level entity. Deactivating may include identifying at the NSSMF whether NSIs sharing one NSSI are all deactivated, deactivating the NSSI if the NSIs are all deactivated, and maintaining the NSSI in an active state if the NSIs are not all deactivated.

A management node according to various embodiments may be a management node in a wireless communication system with a network slicing environment. The management node may include a transceiver and at least one processor connected to the transceiver. The at least one processor may be configured to, as one or more of multiple higher-level entities sharing a lower-level entity managed by the management node are activated, receive an activation request of the shared lower-level entity, and in response to the activation request, activate the shared lower-level entity for the one or more activated higher-level entities.

According to various embodiments, the at least one processor may be configured to, if the higher-level entities are managed by different second management nodes, receive the activation request from a management node which manages the one or more activated higher-level entities among the second management nodes.

According to various embodiments, the at least one processor may be configured to, if multi-level entities including the higher-level entities and the lower-level entities are managed by the management node, detect occurrence of the activation request inside the management node.

According to various embodiments, the management node may include an NSSMF for managing an NSSI which is the lower-level entity. The at least one processor may be configured to receive from an NSMF which manages NSIs which are the higher-level entities, an activation request of the NSSI for a specific NSI of the NSIs, and partially activate the NSSI shared by the NSIs only for the specific NSI.

According to various embodiments, the at least one processor may be configured to transmit an MF activation request for the specific NSI to an EMS which managed MFs, to thus allow the EMS to configure some of the MFs as an MF to activate for the specific NSI in response to the MF activation request.

According to various embodiments, the at least one processor may be configured to transmit an MF configuration request for the specific NSI to the EMS which manages the MFs, to thus allow the EMS to configure an MF for the specific NSI by missing some of the MFs in response to the MF configuration request.

According to various embodiments, the at least one processor may be configured to transmit a network reconfiguration request for enabling network communication related to the specific NSI to a network controller, to thus allow the network controller to reconfigure a network in response to the network reconfiguration request.

According to various embodiments, the at least one processor may be configured to activate the shared lower-level entity only for an activated entity set among the higher-level entities, and deactivate the shared lower-level entity for other deactivated entity set among the higher-level entities.

According to various embodiments, the at least one processor may be configured to, as one or more of the higher-level entities are deactivated, receive a deactivation request of the shared lower-level entity, and in response to the deactivation request, deactivate the shard lower-level entity for one or more deactivated higher-level entities.

According to various embodiments, the management node may include the NSSMF for managing the NSSI which is the lower-level entity. The at least one processor may be configured to identify whether NSIs which are the higher-level entities sharing one NSSI are all deactivated, deactivate the NSSI if the NSIs are all deactivated, and maintain the NSSI in an active state if the NSIs are not all deactivated.

According to various embodiments of the present disclosure, the selective activation and/or deactivation may be implemented in an appropriate manner for the slicing entity (or the shared entity) required for the service under the network slicing environment of the wireless communication system. Hence, compared to activating and/or deactivating the slicing entities as a whole, it is possible to reduce a time taken to configure necessary slicing entities for each network slice, and to improve service quality.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. An operating method of a management node in a wireless communication system with a network slicing environment, comprising:
as one or more of multiple higher-level entities sharing a lower-level entity managed by the management node are activated, receiving an activation request of the shared lower-level entity; and
in response to the activation request, activating the shared lower-level entity for the one or more activated higher-level entities.

2. The method of claim 1, wherein receiving the activation request comprises:
based on the higher-level entities being managed by different second management nodes, receiving the activation request from a management node which manages the one or more activated higher-level entities among the second management nodes.

3. The method of claim 1, wherein receiving the activation request comprises:
based on multi-level entities comprising the higher-level entities and the lower-level entities being managed by the management node, detecting occurrence of the activation request inside the management node.

4. The method of claim 1, wherein the management node comprises a network slice subnet management function (NSSMF) configured to manage a network slice subnet instance (NSSI) including the lower-level entity,
receiving the activation request comprises,
receiving, at the NSSMF, from a network slice management function (NSMF) which manages network slice instances (NSIs) which are the higher-level entities, an activation request of the NSSI for a specific NSI of the NSIs, and
activating comprises,
partially activating, at the NSSMF, the NSSI shared by the NSIs for the specific NSI.

5. The method of claim 4, wherein partially activating, at the NSSMF, the NSSI shared by the NSIs for the specific NSI comprises,
transmitting, at the NSSMF, a managed function (MF) activation request for the specific NSI to an element management system (EMS) which managed MFs, to allow the EMS to configure some of the MFs as an MF to activate for the specific NSI in response to the MF activation request.

6. The method of claim 4, wherein partially activating, at the NSSMF, the NSSI shared by the NSIs for the specific NSI comprises,
transmitting, at the NSSMF, an MF configuration request for the specific NSI to the EMS which manages the MFs, to allow the EMS to configure an MF for the specific NSI by missing some of the MFs in response to the MF configuration request.

7. The method of claim 4, wherein partially activating, at the NSSMF, the NSSI shared by the NSIs for the specific NSI comprises,
transmitting, at the NSSMF, a network reconfiguration request for enabling network communication related to the specific NSI to a network controller, to allow the network controller to reconfigure a network in response to the network reconfiguration request.

8. The method of claim 1, wherein activating comprises,
activating the shared lower-level entity for an activated entity set among the higher-level entities; and
deactivating the shared lower-level entity for other deactivated entity set among the higher-level entities.

9. The method of claim 1, further comprising:
as one or more of the higher-level entities are deactivated, receiving a deactivation request of the shared lower-level entity; and
in response to the deactivation request, deactivating the shard lower-level entity for the one or more deactivated higher-level entities.

10. The method of claim 9, wherein the management node comprises the NSSMF for managing the NSSI includng the lower-level entity, and
deactivating comprises,
identifying at the NSSMF whether NSIs sharing one NSSI are all deactivated;
deactivating the NSSI based on the NSIs all being deactivated; and
maintaining the NSSI in an active state based on the NSIs not all being deactivated.

11. A management node in a wireless communication system with a network slicing environment, comprising:
a transceiver; and
at least one processor, comprising processing circuitry, connected to the transceiver,
wherein the at least one processor is configured to:
as one or more of multiple higher-level entities sharing a lower-level entity managed by the management node are activated, receive an activation request of the shared lower-level entity, and
in response to the activation request, activate the shared lower-level entity for the one or more activated higher-level entities.

12. The management node of claim 11, wherein the at least one processor is configured to,
based on the higher-level entities being managed by different second management nodes, receive the activation request from a management node which manages the one or more activated higher-level entities among the second management nodes.

13. The management node of claim 11, wherein the at least one processor is configured to,
based on multi-level entities comprising the higher-level entities and the lower-level entities being managed by the management node, detect occurrence of the activation request inside the management node.

14. The management node of claim 11, wherein the management node comprises a network slice subnet management function (NSSMF) configured to manage a network slice subnet instance (NSSI) including the lower-level entity, and
wherein the at least one processor is configured to,
receive from a network slice management function (NSMF) which manages network slice instances (NSIs) which are the higher-level entities, an activation request of the NSSI for a specific NSI of the NSIs, and
partially activate the NSSI shared by the NSIs for the specific NSI.

15. The management node of claim 14, wherein the at least one processor is configured to,
transmit a managed function (MF) activation request for the specific NSI to an element management system (EMS) which managed MFs, to thus allow the EMS to configure some of the MFs as an MF to activate for the specific NSI in response to the MF activation request.
